# FASCICULE DE BREVET EUROPEEN

(11) **EP 0 363 289 B1**
(45) Date de publication et mention de la délivrance du brevet: **13.07.1994**
(21) Numéro de dépôt: 89420375.1
(22) Date de dépôt: 03.10.1989
(51) Int. Cl.: G01K 5/48

(54) **Dispositif pour le contrôle de températures contenant au moins un élément en alliage à mémoire de forme**
Temperaturkontrolleinrichtung, die mindestens ein Memorygemisch-Element enthält
Temperature control apparatus containing at least one shape memory alloy element

(30) Priorité: 04.10.1988 FR 8813245
(43) Date de publication de la demande: 11.04.1990
(73) Titulaire: G.I.R. (Société Civile), F-84160 Cadenet (FR)
(72) Inventeur: Girones, Renée-Paule, F-84160 Cadenet (FR)
(74) Mandataire: Maureau, Philippe

(56) Documents cités:
- EP-A- 0 041 755
- EP-A- 0 122 057
- DE-A- 3 802 919
- FR-A- 2 367 278
- US-A- 4 634 021

## Description

La présente invention a pour objet un dispositif pour le contrôle de températures contenant au moins un élément en alliage à mémoire de forme.

Dans de nombreux domaines, il est indispensable d'enregistrer les variations de températures auxquelles est soumis un produit, une variation ou plusieurs variations selon les cas, ou le dépassement de températures prédéterminées pouvant rendre le produit impropre à une utilisation postérieure.

Un exemple courant concerne le domaine alimentaire, dans lequel il convient de suivre la qualité du froid des denrées périssables : produits frais, surgelés, congelés, ou aliments devant être maintenus à une certaine température.

Or, il n'est pas exceptionnel qu'au cours des différentes manipulations auxquelles ils sont soumis, de tels produits dépassent une température prédéterminée au-dessus de laquelle ils peuvent subir des dommages.

Il est également important de suivre la qualité du froid fourni par des appareils de fabrication ou de conservation du froid tels que réfrigérateurs ou congélateurs, un défaut de fonctionnement pouvant se traduire par une remontée en température dommageable pour les produits qu'ils contiennent.

Il convient également d'assurer un suivi en qualité des procédés de stérilisation, tant au niveau des produits stérilisés que des appareils de stérilisation.

Dans le domaine de la santé, il convient de suivre les conditions de conservation du sang ou des produits dérivés du sang, de produits biologiques, biogénétiques ou de certains produits pharmaceutiques nécessitant le respect de températures strictes.

Dans le domaine médical, il convient également d'assurer le suivi des organes de transplantation ainsi que des gamètes animales ou humaines.

Dans le domaine industriel, il est également souhaitable de contrôler la température de fonctionnement de certaines pièces de machines, la température de fabrication de certains composants, notamment des composants électroniques, ainsi que la température de stockage de divers matériaux : matériaux composites ou émulsions photographiques, par exemple.

De plus, dans le domaine industriel, les variations de températures s'accompagnent, dans certains cas, de variations de pression qu'il est nécessaire de suivre. Par exemple, des canalisations sous pression suivies à l'aide de vannes instrumentées.

Il est donc important de disposer d'un dispositif simple et fiable qui puisse être attaché au produit et/ou aux machines, et puisse indiquer, par lecture directe, le dépassement d'une température déterminée.

Le brevet français n° 2 560 992 au nom de la Demanderesse concerne un dispositif dans lequel le dépassement d'une température déterminée est indiqué par une coloration irréversible déclenchée à l'aide d'un élément réalisé en un alliage à mémoire de forme.

Le but de la présente invention est de fournir un dispositif en alliage à mémoire de forme permettant un contrôle de températures :
- susceptible de détecter plusieurs dépassements de températures tout en mémorisant le nombre des dépassements,
- susceptible d'avoir un temps de réponse ("temps de retardement") variable sur chacun des seuils de température, ce qui n'est pas le cas actuellement pour tous les dispositifs, y compris celui du brevet français n⁰ 2 560 992,
- comportant un système inviolable d'affichage de chacun des seuils de températures,
- fonctionnant dans toutes les positions,
- résistant aux chocs, aux vibrations, aux rayonnements et à la corrosion,
- fabriquable et stockable à température ambiante, quelles que soient les températures d'utilisation, et
- s'activant de lui-même par passage des différents seuils de température.

A cet effet, le dispositif qu'elle concerne comprend un boîtier en matière synthétique contenant un élément moteur réalisé en au moins un alliage à mémoire de forme, auquel est associé un élément de transmission du mouvement constitué par un piston et une tige qui agit sur au moins un élément de signalisation enregistrant, de façon irréversible, le dépassement d'une température prédéterminée, le boîtier comportant des fenêtres transparentes permettant la visualisation de l'état du ou des éléments de signalisation.

L'élément moteur fait appel à un matériau en alliage à mémoire de forme de type connu, par exemple de type cuivre-nickel-aluminium, cuivre-zinc-aluminium, ou titane-nickel, ou encore peut être constitué par d'autres alliages ternaires ou quaternaires.

De toute façon, l'invention sera bien comprise à l'aide de la description qui suit, en référence au dessin schématique annexé représentant plusieurs formes d'exécution de ce dispositif destiné au contrôle de franchissement de seuils de température :
Figures 1 à 3 sont trois vues en coupe longitudinale d'un premier dispositif au cours de trois phases de fonctionnement ;
Figures 4 à 6 sont trois vues en coupe longitudinale d'un second dispositif au cours de trois phases de fonctionnement ;
Figures 7 à 9 sont trois vues d'un troisième dispositif pivotant au cours de trois phases de fonctionnement ;
Figures 10 à 12 sont trois vues en coupe longitudinale d'un premier dispositif à déplacement linéaire au cours de trois phases de fonctionnement;
Figures 13 à 15 sont trois vues en coupe longitudinale d'un second dispositif à déplacement linéaire au cours de trois phases de fonctionnement;
Figures 16 et 17 sont deux vues en coupe longitudinale d'une variante d'exécution du dispositif des figures 13 à 15 ;
Figure 18 est une vue de l'extérieur du boîtier d'un dispositif correspondant à l'une des formes d'exécution des figures 13 à 17 ;
Figure 19 représente une seconde variante d'exécution du dispositif de figures 13 à 15 ;
Figures 20 à 23 représentent une variante d'exécution du dispositif de figure 19 avec introduction d'éléments augmentant l'inertie thermique ;
Figures 24 à 26 sont trois vues en coupe d'un autre dispositif ;
Figures 27 à 30 sont quatre vues en coupe d'une première variante du dispositif représenté aux figures 24 à 26 ;
Figures 31 à 34 sont quatre vues en coupe d'une seconde variante du dispositif représenté aux figures 24 à 26 ;
Figures 35 à 37 représentent trois vues en coupe d'un dispositif permettant d'indiquer les durées de dépassement des différents seuils de températures préfixés ;
Figure 38 représente un actionneur rotatif à mémoire de forme.

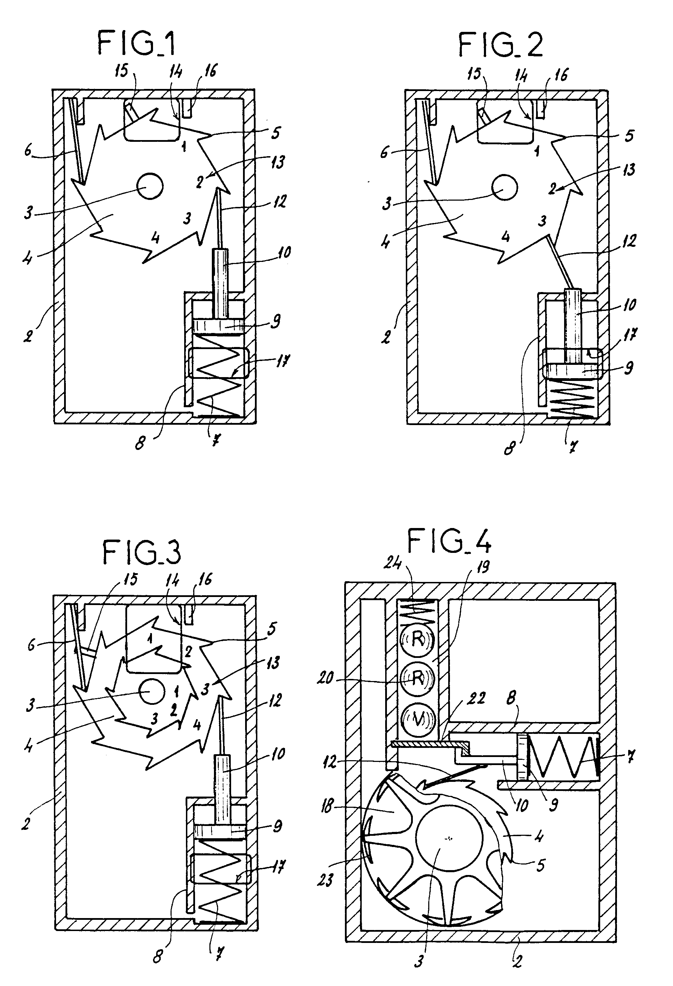

Le dispositif, représenté aux figures 1 à 3, comprend un boîtier **2** de forme générale parallélépipèdique dans lequel est montée pivotante autour d'un axe **3** une roue **4** sur la périphérie de laquelle sont régulièrement réparties des dents **5**.

Comme cela ressort du dessin, les dents **5** sont orientées vers l'arrière par rapport au sens de rotation de la roue. Cette roue ne peut tourner que dans un sens, une languette élastique **6** formant un cliquet anti-retour prenant appui, pour chaque position angulaire stable de la roue, dans le fond de l'évidement ménagé en arrière d'une dent **5**, empêchant ainsi la rotation de la roue dans le sens des aiguilles d'une montre.

Ce dispositif comprend un ressort **7** en alliage à mémoire de forme, monté dans un cylindre **8** d'axe sensiblement tangent à la circonférence de la roue, dont une extrémité est fixée contre le fond du boîtier et dont l'autre extrémité est fixée sur un piston **9** monté coulissant dans le cylindre **8**, et de l'autre face duquel fait saillie une tige **10** dont l'extrémité libre est équipée d'une lame métallique **12** précontrainte en direction de l'axe **3** de la roue, et destinée à venir prendre appui dans l'évidement disposé en arrière d'une dent **5** de la roue **4**.

Comme montré aux figures 1 à 3, la roue **4** comporte, en regard de chaque dent **5**, un repère **13** constitué, dans le cas présent, par un chiffre. Chaque repère **13** est visible à travers une fenêtre transparente **14**, lorsqu'il se trouve en regard de ladite fenêtre. Enfin, la roue **4** comporte un doigt **15** faisant saillie latéralement destiné, lorsque la roue a pivoté de moins d'un tour, à venir prendre appui contre une butée **16** solidaire du boîtier, pour éviter plusieurs passages successifs des mêmes repères **13** en regard de la fenêtre **14**. Il est à noter que la distance entre deux dents **5** adjacentes de la roue correspond à la course du ressort **7** au cours d'une déformation de celui-ci.

Le fonctionnement de ce dispositif est le suivant :
A température ambiante, le ressort **7** est allongé comme montré à la figure 1, le piston **9** se trouvant en position haute, et la lame métallique **12** étant insérée dans l'évidement situé en arrière de la dent portant la référence (2). La fenêtre **14**, de même qu'une fenêtre **17** située sur le parcours du ressort, ne laisse apparaître aucun signe distinctif particulier.

Lorsque la température du boîtier est abaissée à la température de stockage du produit à contrôler, le ressort **7** se contracte jusqu'à ce que ses spires soient sensiblement jointives, entraînant dans sa course le piston **9** qui vient se positionner en regard de la fenêtre **17**, et la lame métallique **12** dont l'extrémité vient se loger dans l'évidement situé en arrière de la dent référencée (3).

Le fait pour l'utilisateur de visualiser le piston **9** à travers la fenêtre permet de savoir que le produit et le dispositif qui lui est associé sont bien à la température de conservation choisie.

Lors d'une remontée de température au-dessus d'un seuil pré-déterminé, le ressort **7** retrouve sa configuration allongée, comme montré à la figure 3, la lame métallique **12** entraînant, au cours de la détente du ressort, la roue **4** en rotation dans le sens inverse des aiguilles d'une montre, la fin de rotation étant telle que la fenêtre **14** laisse apparaître la dent portant la référence (1). Simultanément, le piston **9** disparaît de la fenêtre **17**, ce qui signifie que la température normale de stockage a été dépassée, et que cette remontée en température continue puisque le piston n'est pas visible dans le repère **17**.

Lors d'une nouvelle descente en température, le ressort se contracte et le piston **9** se retrouve visible à travers la fenêtre, signifiant que l'on a retrouvé la température de stockage, l'information fournie dans la fenêtre **14** indiquant toutefois que le produit a subi un dépassement du seuil normal de température. Il est ainsi possible de visualiser immédiatement le nombre de dépassements de température, ce nombre pouvant être au plus égal au nombre de dents de la roue, puisque celle-ci se trouve nécessairement immobilisée en rotation par appui du doigt **15** contre la butée **16**, plusieurs rotations successives de la roue ne pouvant, en effet, permettre de comptabiliser un nombre exact de dépassements de température.

Il est possible d'associer plusieurs roues de diamètres différents (voir figure 3), qui s'actionnent successivement lorsque la roue de taille supérieure a fait un tour ; ainsi, il y a un nombre supérieur de dépassements de température qui peut être détecté.

Les figures 4 à 6 représentent un dispositif similaire au précédent, c'est-à-dire comportant une roue crantée, dans lequel les mêmes éléments sont désignés par les mêmes références que précédemment.

Dans ce nouveau dispositif, la roue dentée **4** est équipée, dans un plan parallèle à celui comportant les dents, d'un nombre égal de godets **18** occupant la même répartition angulaire et débouchant vers l'extérieur. Un magasin **19** contenant des billes **20** est monté de façon adjacente au cylindre **8** contenant le ressort **7** en alliage à mémoire de forne, les axes respectivement du cylindre **8** et du magasin **20** étant perpendiculaires. L'ouverture du magasin **19** est obturable par un tiroir **22**, déplaçable par la tige **10** associée au piston **9**. La taille des godets **18** est telle que chacun d'entre eux puisse recevoir une bille **20**, chaque bille étant retenue dans le godet qu'elle est susceptible de remplir par des languettes élastiques **23** disposées au bord du godet.

Le fonctionnement de ce dispositif est le suivant :
A la température ambiante et comme montré à la figure 4, les billes **20** sont bloquées dans le magasin **19** par le tiroir **22**. Lorsque la température descend jusqu'à la valeur de stockage, le ressort **7** se comprime, entraînant dans sa course la tige **10** et le tiroir **22** qui ouvre le magesin **19.** La première bille, qui peut être par exemple une bille de couleur verte, est poussée par les billes suivantes, qui sont soumises à l'àction d'un ressort **24**, dans le premier godet **18**. Lors d'une remontée en température au-dessus d'un seuil prédéterminé, le ressort retrouve sa forme allongée et actionne, par l'intermédiaire de la tige **10** et de la lame métallique **12,** la roue **4** en rotation, le tiroir **22** n'étant pas déplacé.

Au cours de cette rotation, un nouveau godet **18** vient en regard du magasin **19**, permettant la réception d'une bille **20** qui peut être une bille rouge traduisant le dépassement de la température de seuil. Une nouvelle descente en température permet une recompression du ressort. La transparence de la partie supérieure du boîtier, ou tout au moins de la zone de celui-ci située en regard du parcours du godet, permet de visualiser immédiatement le nombre de dépassements de la température de seuil.

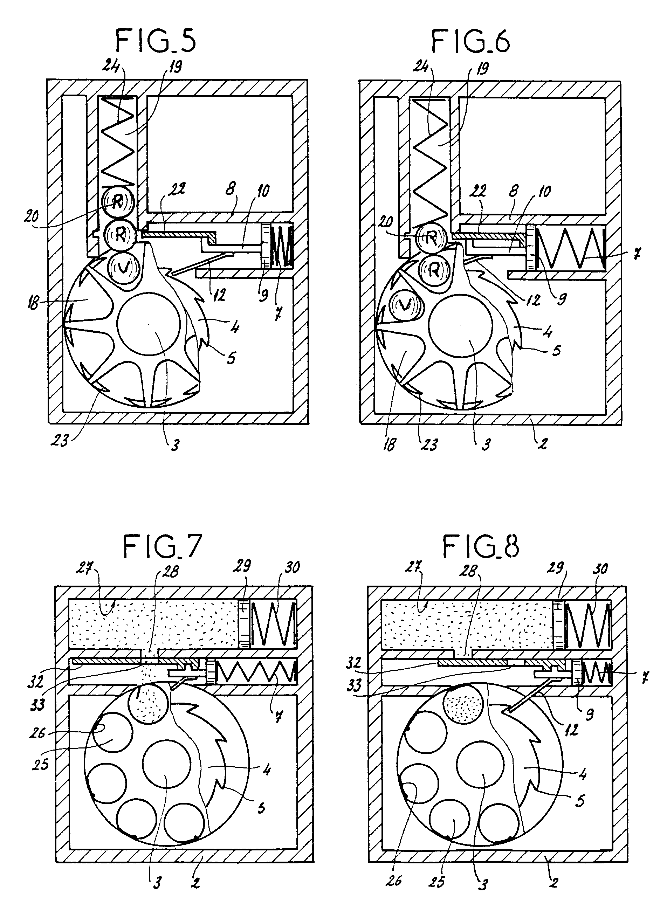

Les figures 7 à 9 représentent un autre dispositif similaire aux précédents, c'est-à-dire comportant une roue crantée entraînable en rotation lors de chaque dépassement de température, dans lequel les mêmes éléments sont désignés par les mêmes références que précédemment. Dans ce cas, à la roue crantée sont associés des godets **25** situés chacun en regard d'une dent **5** de la roue, ces godets comportant chacun un clapet de fermeture **26**.

Dans cette forme d'exécution, un réservoir **27** contenant un fluide tel que de la poudre, du sable ou un liquide visqueux, est monté adjacent au cylindre **8** contenant le ressort **7**. Le fluide est susceptible de s'écouler hors du réservoir par une ouverture **28** sous l'action de la pression exercée par un piston **29** et un ressort **30**. Un tiroir **32** comportant lui-même une ouverture **33** est solidaire de la tige **10**, l'ouverture **33** étant positionnée de façon telle qu'elle se trouve en regard de l'ouverture **32** du réservoir lorsque le ressort **7** est en position détendue.

A température ambiante, représentée à la figure 7, les ouvertures **32** et **33** se trouvant en regard, le premier godet **25** se remplit de fluide. Lorsque le dispositif descend en température, en dessous d'une valeur prédéterminée, le ressort **7** se comprime, le tiroir **32** assurant alors la fermeture du réservoir **27**, comme montré à la figure 8. Lors d'un dépassement de la température de seuil, le ressort **7** se détend, ce qui assure, d'une part, la rotation de la roue **4** et l'amenée d'un nouveau godet en regard de l'ouverture **32** du réservoir et, d'autre part, la mise en communication de cette ouverture **32** avec l'ouverture **33** du tiroir. Ce godet se remplit jusqu'à ce que la température redescende, la quantité de fluide contenue dans le godet permettant de déterminer non seulement l'existence d'un dépassement de température, mais également d'estimer la durée de ce dépassement, lorsque l'on connaît le débit d'écoulement du fluide hors du réservoir.

Il serait possible de disposer d'un appareil plus élaboré comprenant un second moteur en alliage à mémoire de forme, fermant le tiroir ou les clapets, dès que la température de seuil est franchie en sens inverse, de façon à indiquer le temps de dépassement du seuil.

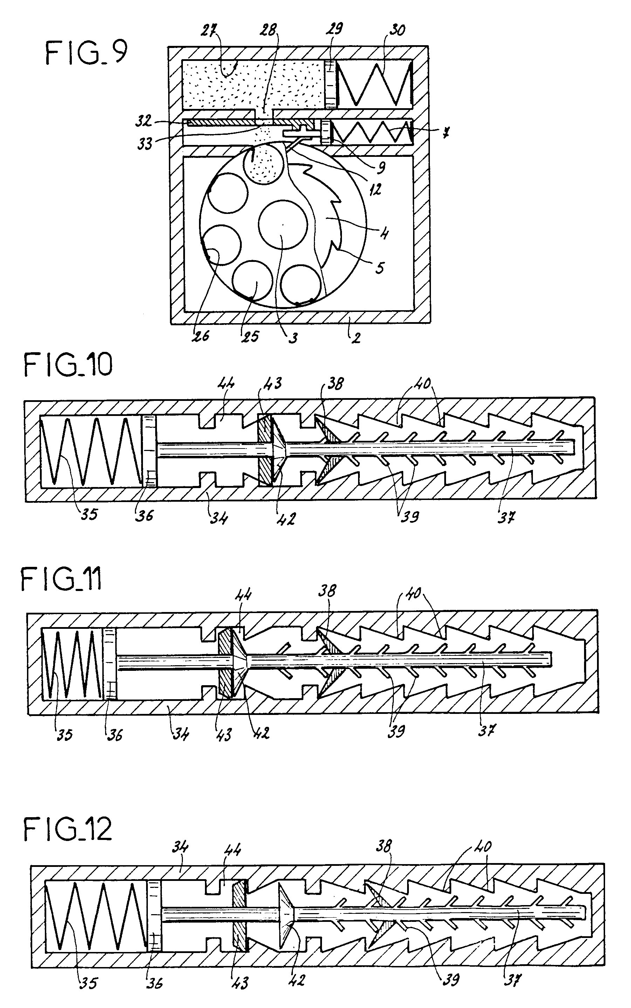

Le dispositif, représenté aux figures 10 à 12, est un dispositif à fonctionnement linéaire, comportant un corps allongé **34**, par exemple de forme cylindrique. A l'une des extrémités du boîtier **34** est monté, à l'intérieur de celui-ci, un ressort **35** en alliage à mémoire de forme, dont une extrémité est fixée contre le fond du boîtier et dont l'autre extrémité est fixée sur un piston **36** solidaire d'une tige **37** s'étendant dans le sens de la longueur du boîtier. Sur cette tige **37** est montée un curseur **38** présentant une ouverture centrale et dont le corps est profilé, c'est-à-dire dont la paroi latérale s'étend depuis la tige vers l'extérieur, et de l'extrémité du boîtier opposée à celle équipée du ressort, vers celle comportant le ressort. La tige est équipée de crans **39** profilés en sens inverse du curseur, pour permettre un déplacement relatif par rapport au curseur, seulement en direction du ressort **35**. Pour sa part, le boîtier comporte, sur sa face interne, des crans **40** constitués par une succession de surfaces inclinées et de surfaces perpendiculaires à la tige **37**, permettant seulement le déplacement du curseur, de l'extrémité du boîtier comportant le ressort vers son extrémité opposée. La tige **37** porte également, du côté du piston **36**, un épaulement **42** destiné à coopérer avec un anneau **43** monté libre sur la tige, entre le piston **36** et lui-même. A proximité de son extrémité située du côté du piston **36**, le boîtier **34** comporte un logement **44** disposé en regard d'une fenêtre, non représentée au dessin. Il est à noter que la course du ressort **35** au cours d'un cycle de déformation, correspond sensiblement au pas des crans **40** du boîtier.

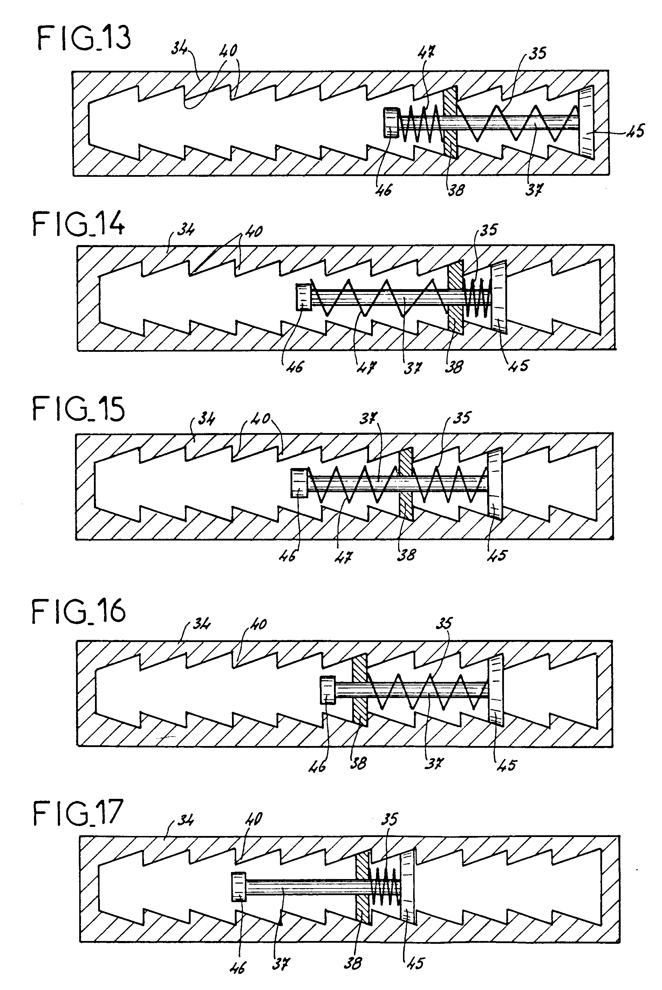

Le fonctionnement de ce dispositif est le suivant :
A température ambiante et avant première utilisation, le dispositif se trouve dans l'état représenté à la figure 10. Lorsque la température est abaissée jusqu'à la valeur de stockage, le ressort **35** se comprime, entraînant dans son mouvement le piston **36**, la tige **37** et l'épaulement **42.** Ce dernier fait passer l'anneau **43** dans le logement **44** ce qui permet de visualiser instantanément la descente à la température de stockage. Il est à noter qu'au cours de ce mouvement, et comme montré à la figure 11, le curseur **38** n'a pas bougé, puisqu'il est demeuré bloqué par le cran **40**, contre lequel il était en appui, tout en permettant le passage d'un cran anti-retour **39** de la tige **37** dans son ouverture centrale.

Lors d'une montée en température, au-dessus de la valeur de seuil, le ressort **35** se détend, assurant le déplacement vers la droite du piston **36** et de la tige **37**. Un cran **39** en appui contre le curseur **38** déplace celui-ci vers la droite pour l'amener en position de blocage dans le cran anti-retour **40** suivant.

Il est ainsi possible de visualiser immédiatement le nombre de dépassements de la température du seuil, en comptabilisant le nombre de crans **40**, qui ont été parcourus par le curseur **38**. Ceci est rendu possible en ménageant une fenêtre dans le corps du boîtier sur le parcours du curseur **38**, et en portant des graduations le long de cette fenêtre:

Les figures 13 à 15 représentent une variante d'exécution du dispositif de figures 10 à 12, dans laquelle les mêmes éléments sont désignés par les mêmes références que précédemment.

Dans ce cas, le ressort **35**, en alliage à mémoire de forme, est fixé non pas contre le fond du boîtier, mais contre le fond d'un second curseur **45** jouant le rôle du piston **36** décrit précédemment, le ressort **35** prenant appui directement sur le curseur **38**. Ce curseur **38** est traversé par la tige **37** solidaire du curseur **45,** dont l'extrémité libre comporte un épaulement **46** servant à l'appui d'un ressort d'équilibrage **47** dont l'autre extrémité est en appui contre le curseur **38**. Lorsque le dispositif est à température ambiante, comme montré à la figure 13, le ressort **35** est détendu et les deux curseurs **38** et **45** sont séparés par trois crans **40** du boîtier **34**. Lorsque le dispositif descend en température et que la température de stockage est atteinte, le ressort se comprime. Le curseur **38** étant bloqué contre un cran **40**, le curseur **45** accompagne le ressort dans son mouvement, de telle sorte qu'en fin de compression, les deux curseurs se trouvent placés sur des crans voisins, comme montré à la figure 14. Une fenêtre, non représentée au dessin, permet de visualiser la position des deux curseurs. Si, lors d'une remontée en température, la température de seuil est atteinte, puis dépassée, le ressort **35** s'allonge, le curseur **45** étant bloqué contre le cran **40** au contact duquel il se trouve, seul le curseur **38** peut accompagner le mouvement du ressort et se déplacer d'un cran. Si la température continue d'augmenter, le curseur **38** peut continuer à se déplacer compte tenu de l'allongement correspondant du ressort **35**.

La présence du ressort d'équilibrage **47** permet d'éviter de solidariser l'extrémité du ressort **35** et le curseur **38**, et de compenser les phénomènes d'hystérésis liés au fonctionnement d'un ressort en alliage à mémoire de forme.

Dans la mesure où le ressort **35** est fixé à ses deux extrémités, respectivement, sur le curseur **38** et sur le curseur **45**, et dans la mesure où il ne présente pas de phénomène d'hystérésis, il est possible de se dispenser du ressort d'équilibrage **47**.

Le dispositif se présente alors sous la forme simplifiée représentée aux figures 16 à 17 où le ressort se trouve, respectivement, en position détendue et en position comprimée.

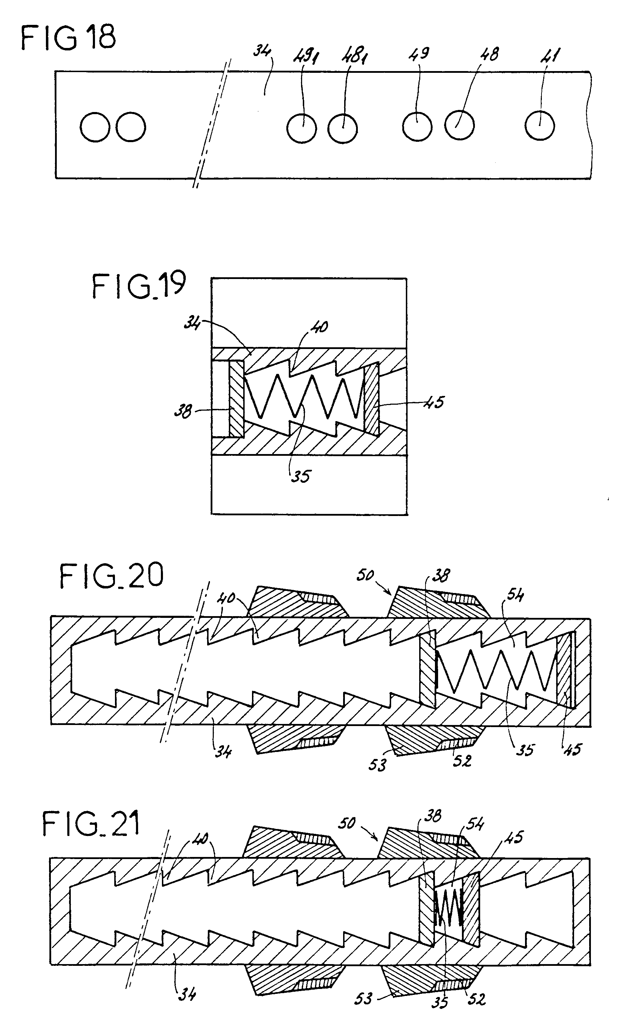

La figure 18 représente très schématiquement l'extérieur d'un boîtier et, plus spécialement, les séries de fenêtres ménagées dans celui-ci. Ces fenêtres référencées **48** et **49** sont groupées par paire, à l'exception, à l'extrême droite, de la fenêtre **41** dans laquelle le curseur **45** se trouve et qui correspond à la température normale de fabrication (température ambiante). A la température de fabrication, le curseur **45** est dans la fenêtre **41**, tandis que le curseur **38** est dans la fenêtre **49**. A la température normale de stockage (basse température), le curseur **45** est passé dans la fenêtre **48**, tandis que le curseur **38** est passé dans la fenêtre **49**. Après un premier dépassement de température au-dessus de la température de stockage, le curseur **45** est passé dans la fenêtre **48**, tandis que le curseur **38** est resté dans la fenêtre **49**_{**l**}. Lors du retour à la température basse de stockage, le curseur **45** passe dans la fenêtre **48**_{**l**}.

Ainsi, les indices _{**i**} des fenêtres **48**_{**i**} et **49**_{**i**} indiquent le nombre de dépassements de la température de stockage et, selon la position du curseur **45**, le retour ou non à la température de stockage après le _{**i**}ème dépassement.

Selon l'épaisseur du boîtier **34**, il y aura un temps de retard au dépassement en températures plus ou moins important : de quelques minutes à plusieurs heures, selon la demande de l'utilisateur lors de la fabrication du dispositif.

Il est possible de modifier le boîtier au niveau de la position des fenêtres **49**_{**i**} par rapport à **48**_{**i**} et de suivre le couple **45-46** (au lieu de **45-38**) dans ses mouvements respectifs.

Il est intéressant de disposer de curseurs de couleurs différentes : le **45** en vert et le (ou les) **38** (et **46**) en rouge, par exemple. Ainsi l'utilisateur poura conclure immédiatement aux dépassements de la température normale de stockage.

La figure 19 représente une variante d'exécution des dispositifs précédents, dans laquelle les deux curseurs **38** et **45** ne sont plus reliés l'un à l'autre par une tige coulissante à travers le curseur **38** mais seulement par le ressort **35**, en alliage en mémoire de forme. Il est à noter que le curseur **38** peut lui-même être réalisé en un alliage à mémoire de forme, afin d'intervenir sur ces conditions de déplacement et de blocage dans les crans **40**, en fonction des températures de stockage et de seuil.

Les figures 20 à 23 représentent une variante d'exécution du dispositif des figures 16, 17 et 19, dans laquelle sont prévus des moyens permettant de retarder la déformation de l'élément **35** en alliage à mémoirede forme, lors du dépassement d'une température de seuil. A cet effet, le boîtier est muni, sur sa périphérie, d'un certain nombre d'éléments **50** décalés axialement les uns par rapport aux autres, s'étendant chacun sur une longueur correspondant à trois crans, et dont la partie amont **52**, dans le sens de déplacement du ressort **35**, est inférieure à l'épaisseur de la partie aval **53**.

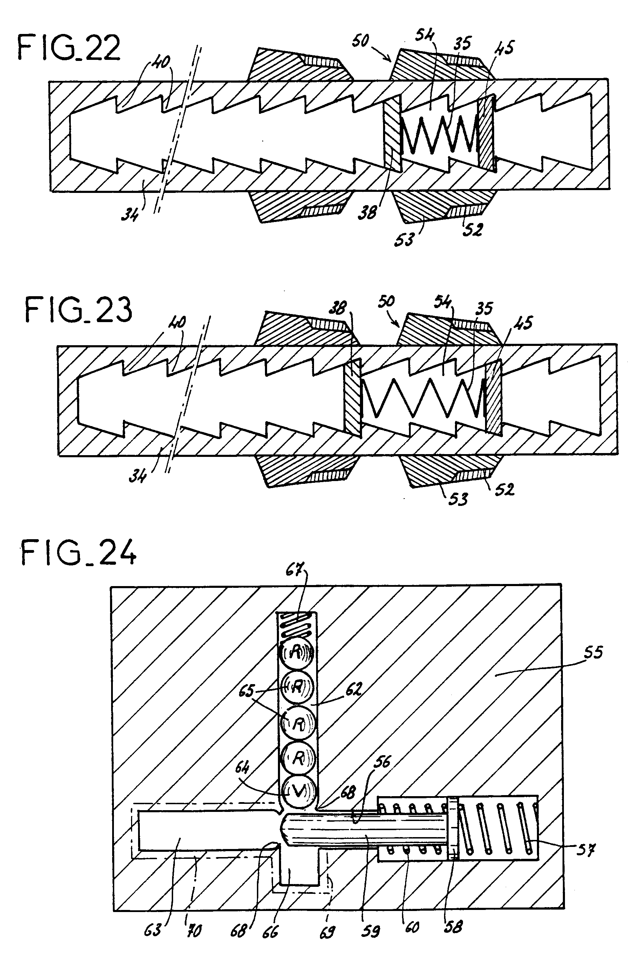

A température ambiante, le ressort **35** se trouve en position allongée et les deux curseurs **38** et **45** sont séparés par trois crans. Ils délimitent avec le corps du boîtier une chambre **54**. La faible épaisseur du corps du boîtier permet une diffusion thermique rapide, de telle sorte que, lorsque la température descend jusqu'à la valeur de consigne, le ressort **35** se contracte très rapidement jusqu'à ce que le curseur **45** se trouve en appui contre un cran adjacent de celui contre lequel est en appui le curseur **38**. Dans cette position, le volume délimité entre les deux curseurs se trouve, comme montré à la figure 21, en regard de la partie **52** de faible épaisseur du premier élément **50**. Lorsque la température dépasse la température de seuil, l'élément **50**, compte tenu de son inertie thermique, retarde le moment de réponse du ressort. Lorsque le ressort se détend, le curseur **38** se déplace en même temps que celui-ci, comme montré aux figures 22 et 23.

En jouant sur l'épaisseur de matière des éléments **50**, il est possible de régler le temps de réponse du ressort **35** et, éventuellement, de disposer de plusieurs éléments de différentes épaisseurs pour introduire des inerties spécifiques aux différents dépassements.

Les figures 24 à 26 représentent un autre dispositif comportant un boîtier **55** de forme générale parallélépipèdique, dans lequel sont ménagées deux chambres allongées perpendiculaires l'une à l'autre, et débouchant l'une dans l'autre. La première chambre **56** contient, à l'une de ses extrémités, un ressort **57** en alliage à mémoire de forme, dont une extrémité est solidaire du fond de la chambre, et dont une extrémité prend appui contre un piston **58** solidaire d'une tige **59**. Sur le piston **58** prend appui un ressort d'équilibrage **60** dont la présence est facultative. La chambre **56** s'étend de l'autre côté de sa zone de raccordement avec la chambre **62,** qui en est perpendiculaire, afin de former une zone **63** de réception de billes. En effet, la partie principale de la chambre **62** forme un réservoir pour plusieurs billes, au nombre de cinq dans la forme d'exécution représentée au dessin, dont la première **64** est de couleur verte, et dont les autres **65** sont de couleur rouge.

Dans sa zone située au-delà de la chambre **56**, cette chambre **62** délimite un compartiment **66** permettant la réception d'une seule bille. La longueur de la tige **59** est telle qu'en fonction de l'état du ressort **57**, elle obture ou non la chambre **62**.

A température ambiante, le dispositif se trouve dans l'état représenté à la figure 24, les cinq billes sont logées dans la chambre **62** et celle-ci est obturée par la tige **59**. Lors de la descente à la température de consigne, le ressort **57** se contracte, permettant un recul du piston, qui ouvre la chambre **62** et sous l'action de détente du ressort **67** logé dans cette dernière, l'avancée des billes, la bille verte tombant dans le compartiment **66**, et la première bille rouge venant en regard du piston **59**.

Il est à noter que des languettes **68**, ménagées dans les zones de croisement des chambres **56** et **62** évitent des déplacements désordonnés des billes, aux températures non désirées.

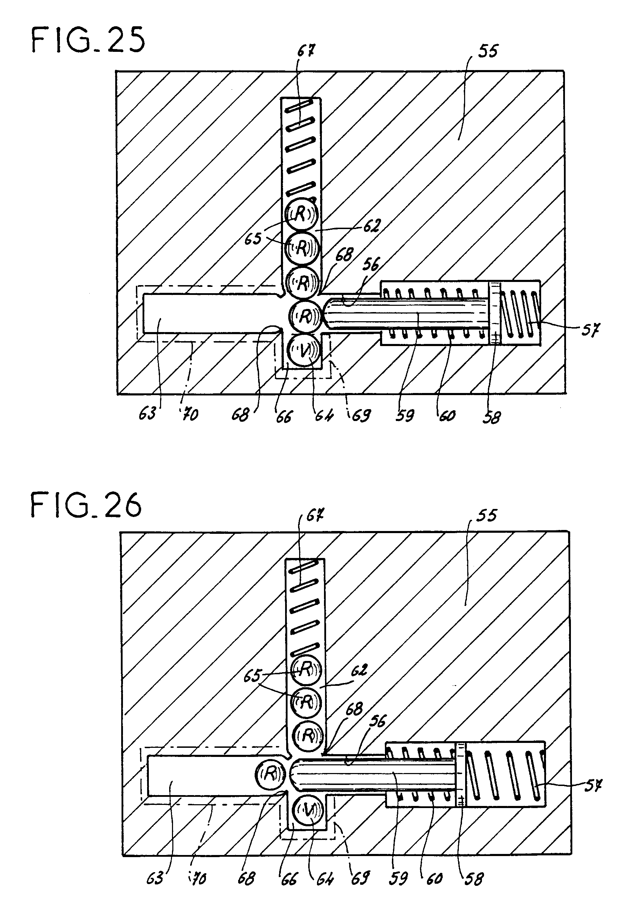

En position de stockage normal, le dispositif se trouve dans la position représentée à la figure 25, la bille verte **64** étant visible par une fenêtre **69**, ce qui indique que la température de stockage a bien été atteinte. Lors d'une remontée en température au-dessus de la température de consigne, le ressort se détend et déplace le piston vers l'avant, ce mouvement faisant passer la première bille rouge **65** dans le compartiment **63**, où cette bille peut être visualisée par une fenêtre **70**. Au cours de chaque cycle suivant de descente et de remontée en température, une bille rouge est amenée dans le compartiment **63**, ce qui permet à l'utilisateur de visualiser directement le nombre de dépassements de température.

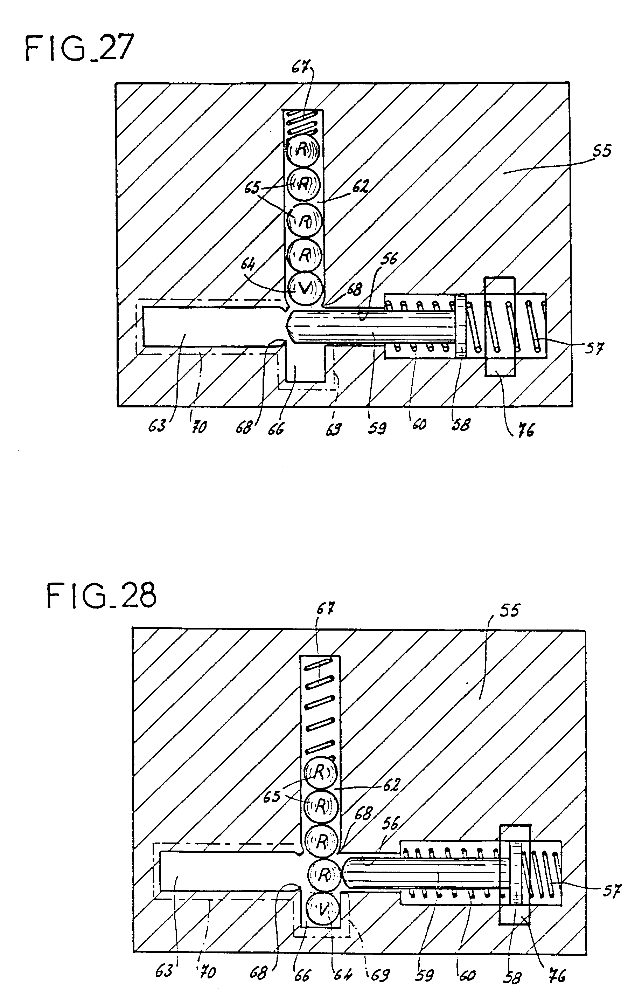

Les figures 27 à 30 représentent une première variante du dispositif décrit en référence aux figures 24 à 26, dans laquelle les mêmes éléments sont désignés par les mêmes références que précédemment.

Ce dispositif présente une originalité supplémentaire par la présence d'une fenêtre **76**. Son fonctionnement est identique, seules des indications sont obtenues de façon supplémentaire par la présence de cette fenêtre **76**. A température ambiante, le dispositif se trouve dans l'état représenté à la figure 27, les cinq billes sont logées dans la chambre **62**, et celle-ci est obturée par la tige **59**. Par la fenêtre 76, seul le ressort **57** est visible. Lors de la descente de la température de consigne, le ressort se contracte, permettant un recul du piston, qui ouvre la chambre **62** et sous l'action de détente du ressort **67** logé dans cette dernière, l'avancée des billes, la bille verte tombant dans le compartiment **66**, et la première bille rouge venant en regard du piston **59**.

Il est à noter que des languettes **68**, ménagées dans les zones croisement des chambres **56** et **62** évitent des déplacements désordonnés des billes, aux températures non désirées.

En position de stockage normal, le dispositif se trouve dans la position représentée à la figure 28, la bille verte **64** étant visible par une fenêtre **69** et l'appui du piston **58** se trouvant lui aussi visible par la fenêtre **76**. Ces deux signaux indiquent que la température de stockage a bien été atteinte lors de la première descente en température.

Lors d'une remontée en température au-dessus de la température de consigne, le ressort en alliage à mémoire de forme se détend et déplace le piston vers l'avant, ce mouvement faisant passer la première bille rouge **65** dans le compartiment **63**, où cette bille peut être visualisée par une fenêtre **70**.

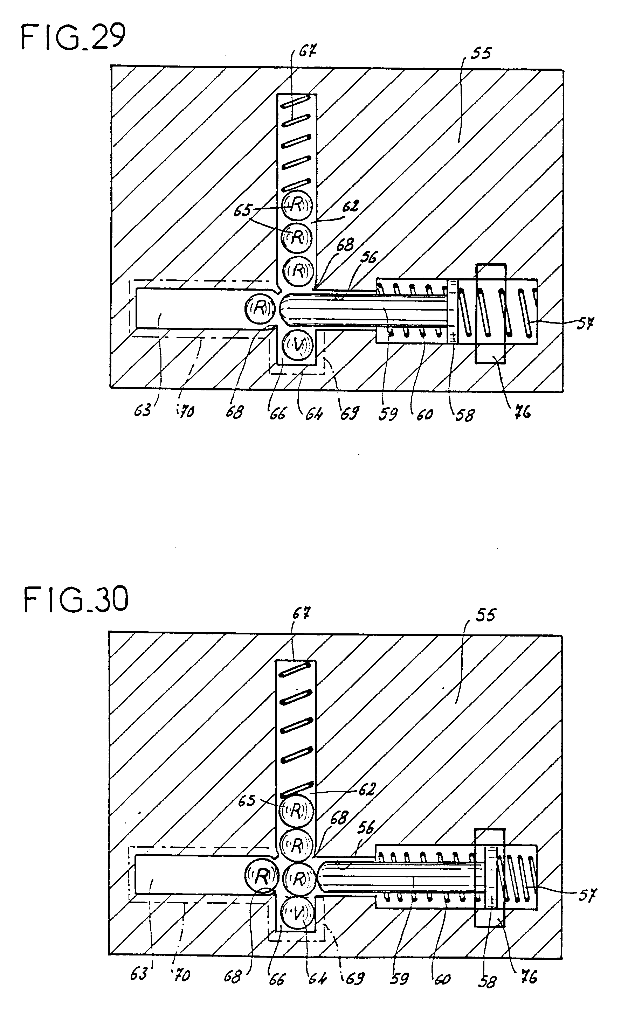

L'appui du piston **58**, quant à lui, n'est plus visible dans la nouvelle fenêtre **76**, comme montré à la figure 29. Cependant, il se peut que l'élévation de la température ne soit pas suffisante pour passer le seuil critique préfixé, donc que la bille rouge ne soit pas éjectée, le ressort à mémoire n'étant pas assez détendu. Cette possibilité sera mise en évidence par ce dispositif car l'appui du piston **58** ne sera plus visible dans la fenêtre **76**.

Au cours de chaque cycle suivant de descente et de remontée en température, une bille rouge est amenée dans le compartiment **63**, ce qui permet à l'utilisateur de visualiser directement le nombre de dépassements de température.

La figure 30 présente la première descente en température consécutive à une remontée intempestive en température décrite à la figure 29. Lorsque la température de stockage est de nouveau atteinte, l'appui du piston **58** est de nouveau visible dans la nouvelle fenêtre **76**. Si celui-ci n'est pas visible et que le dispositif est dans la configuration de la figure 30 (une bille rouge éjectée) cela signifie que la température est supérieure à la température de stockage.

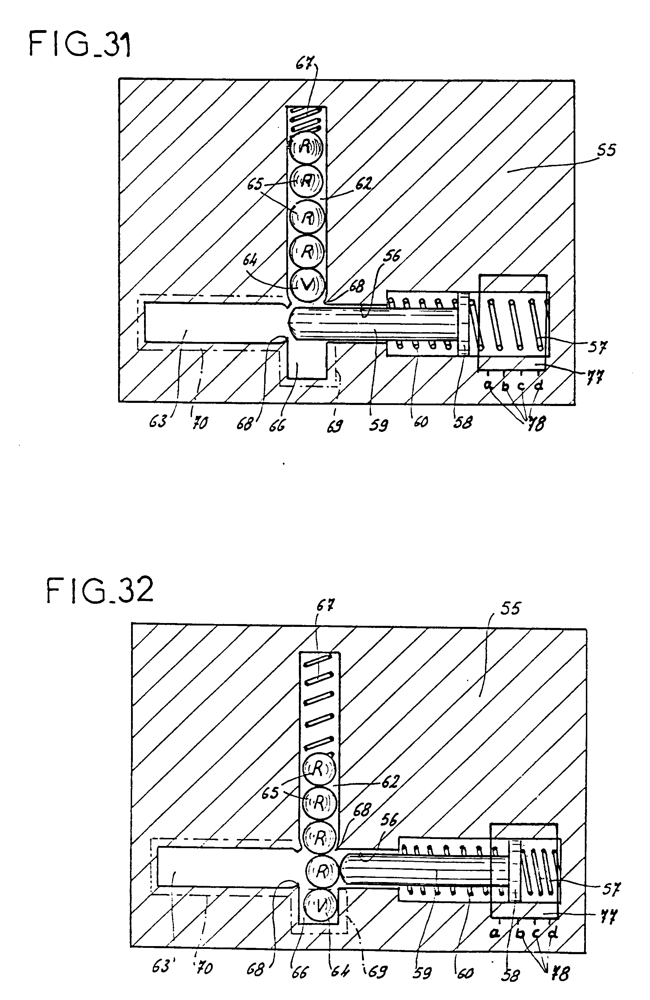

Les figures 31 à 34 représentent une seconde variante du dispositif décrit précédemment en référence aux figures 24 à 26. Par rapport à celui-ci il présente une originalité par la présence d'une grande fenêtre **77** disposée dans la zone de débattement du ressort **57** en alliage à mémoire de forme et qui se trouve être graduée linéairement **78, (a,b,c,d) ;** le fonctionnement est identique à celui du dispositif précédent avec des indications supplémentaires. A la température ambiante (figure 31) face à la fenêtre graduée **77**, seul est visible le ressort **57**.

Lors de la descente à la température de consigne, le dispositif se trouve dans la position représentée à la figure 32, la bille verte **64** étant visible par une fenêtre **69** et l'appui du piston **58** se trouvant lui aussi visible par la fenêtre **77** et en face d'une des graduations **78 b.**

Ces graduations linéaires correspondent pour un ressort en alliage à mémoire donnée **57** à une série de températures.

Ainsi par exemple dans ce cas :
a = - 13° C
b = - 16° C
c = - 19° C
d = - 22° C
A la figure 32, la température est de - 16° C. Ainsi il est possible en permanence, lorsque le dispositif se trouve en température de stockage de connaître la valeur exacte de la température.

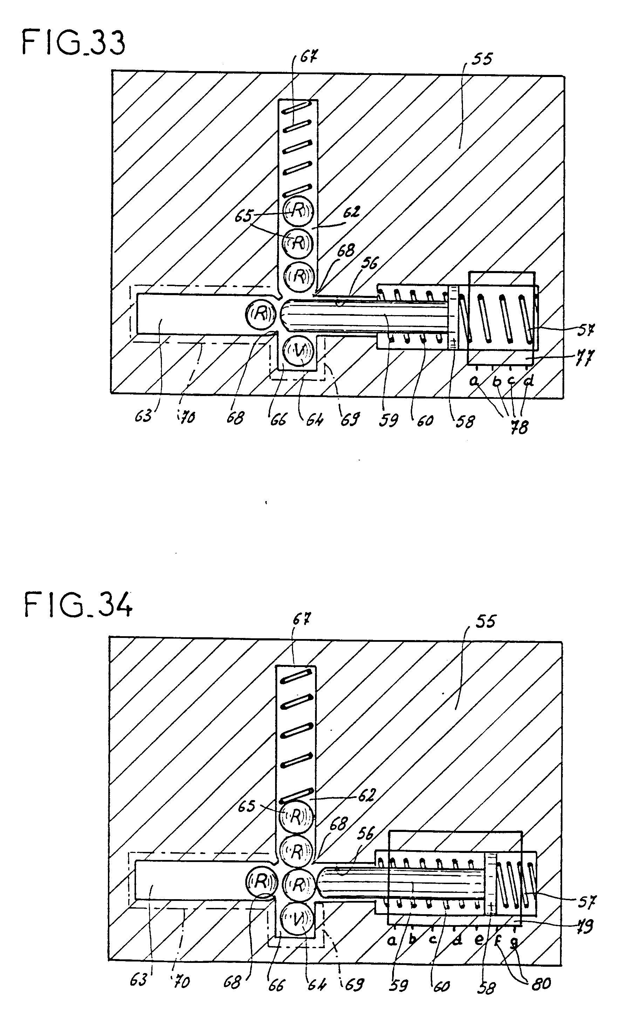

Lors d'une remontée en température au-dessus de la température de consigne, ce qui est représenté à la figure 33, une bille rouge **65** est éjectée dans le compartiment **63** où elle est visualisée par la fenêtre **70.** L'appui du piston **58** quant à lui, n'est plus visible dans la fenêtre **77**.

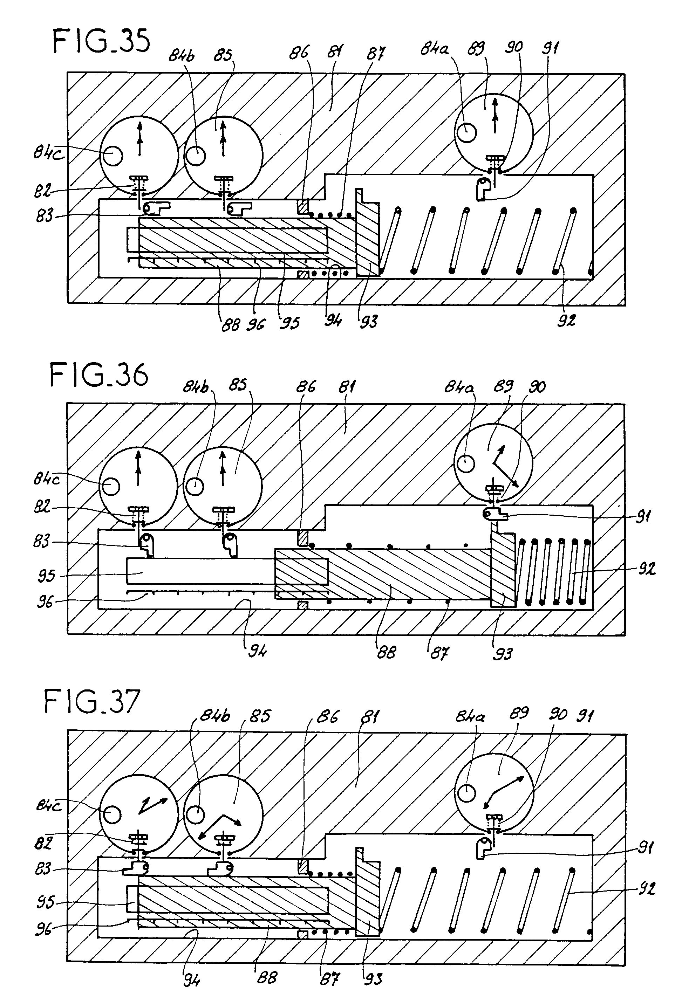

Une variante avantageuse de ce dispositif, représentée à la figure 34, consiste à aggrandir suffisamment en largeur cette fenêtre graduée **79** afin de déterminer instantanément quelle est la température entre par exemple :
a = + 5° C
b = 0° C
c = - 5° C
d = - 10° C
e = - 15° C
f = - 20° C
g = - 25° C
Les figures 35 à 37 représentent trois vues en coupe d'un autre dispositif permettant d'indiquer les durées de dépassement des différents seuils de température préfixée.

Ce dispositif comprend un boîtier **81** de forme générale parallélépipèdique, dans lequel est ménagée une chambre allongée **94**. Dans l'une de ses extrémités, cette chambre contient un ressort **92** en alliage à mémoire de forme, dont une extrémité est solidaire du fond de la chambre, et dont l'autre extrémité prend appui contre la tête d'un piston **93** solidaire d'une tige **88.** Sur ce piston **93** prend appui un ressort d'équilibrage **87** dont la présence est facultative. La chambre **94** comprend une seconde partie séparée de l'autre par une chicane **86**. Dans chaque partie de cette chambre **94** se trouve au moins un mécanisme d'horlogerie **85, 89** couplé à un mécanisme de compte-tours **84** dont les déclenchements s'opèrent à l'aide de poussoirs spécifiques **83, 91** actionnant un interrupteur **82, 90**.

A la température ambiante, le dispositif se trouve dans l'état représenté à la figure 35, le ressort **92** à mémoire de forme est détendu et le piston et sa tige **93** occupent toute l'extrémité gauche de la chambre allongée **94**. Le ressort d'équilibrage **87** se trouve comprimé entre la chicane **86** et l'appui du piston **93**.

Du fait de l'absence de l'appui du piston **93** sous le poussoir **91**, l'interrupteur **90** n'est pas enclenché, le mouvement d'horlogerie **89** de la température de consigne (stockage) indique une durée nulle et le nombre de passages à cette température de stockage est aussi nul au compte tour **84**_{**a**}**.**

Malgré la présence de la tige du piston, dont l'extrémité dans la fenêtre graduée **95, 96** indique la température ambiante (par exemple 20° C), sous les poussoirs **83** des mécanismes d'horlogerie pour le dépassement des températures élevées, les mouvements d'horlogerie **85** indiquent une durée nulle ainsi que le nombre de passages qui est nul pour chacun des comptes-tours **84**_{**b**} **et 84**_{**c**}**.**

Cela s'explique par la forme des poussoirs **83** qui sont montés à l'inverse de celui décrit en **91**. Ainsi lors du montage du dispositif à la température ambiante, en usine, bien que la tige du piston soit en contact avec les poussoirs, ceux-ci ne peuvent déclencher les mécanismes d'horlogerie et les compte-tours.

Le dispositif est donc neuf, armé, aucun mécanisme d'horlogerie ne fonctionne.

Lors de la descente à la température de consigne le ressort à mémoire **92** se contracte, permettant un recul du piston. L'appui du piston **93** fait basculer le poussoir **91** qui déclenche l'interrupteur **90**. Le mécanisme d'horlogerie pour la basse température (par exemple - 18° C) se met en marche, ainsi que le compte-tour **84**_{**a**} qui indique 1.

La figure 36 indique ce fonctionnement. L'extrémité du piston se trouve dans la fenêtre **95** à une extrémité droite dont la graduation **96** indique - 20° C, ou bien une température inférieure telle que - 25° C.

Ainsi en regardant le dispositif on sait :
- qu'il est pour une durée de x heures à au moins - 20° C, qu'il s'agit de son premier passage et qu'à l'instant **t** il est à - 25° C par exemple.

Quant aux mouvements d'horlogerie **85** correspondant aux dépassements des températures élevées, ils indiquent toujours une durée nulle ainsi que le nombre de passages qui est nul pour chacun des compte-tours **84**_{**b**}**, 84**_{**c**}**.** Cela est dû à l'absence de la tige du piston sous chacun des poussoirs **83**, qui ne peuvent enclencher les interrupteurs **82**.

En position de stockage, seul le mécanisme d'horlogerie pour la température de stockage fonctionne et son compte-tours indique **1**.

Lors d'une remontée en température au-dessus de la température de consigne, comme montré à la figure 37, le ressort à mémoire **92** se détend, déplace le piston vers l'avant, et ce mouvement selon son amplitude :
- arrête, par l'absence de la tête du piston sous le poussoir **91** le mécanisme d'horlogerie de la température de stockage,
- déclenche au moins un des mécanismes d'horlogerie des températures élevées par la présence de la tige du piston sous le poussoir **83** qui enclenche l'interrupteur **82**, le temps commence à être indiqué et le compte-tours marque **1 (84**_{**b**}**).**

Si l'amplitude de mouvement est plus importante (la température est plus élevée) la tige du piston enclenche le second poussoir **83**, le second mécanisme d'horlogerie se met en marche et le compte-tours **84**_{**c**} marque **1**.

En permanence peut être lue la température à laquelle se trouve le dispositif par la position de l'extrémité gauche de la tige du piston au regard de la graduation **96** de la fenêtre **95**.

Lors de la redescente en température de consigne, le ressort à mémoire se contractant, l'appui du piston **93** fait de nouveau basculer le poussoir **91** qui déclenche l'interrupteur **90**. Le mécanisme d'horlogerie pour la basse température se remet en marche, le compte tour **84**_{**a**} indique **2.**

Lors d'une nouvelle remontée en température, c'est le ou les mécanismes d'horlogerie pour les températures élevées qui se remettent en marche, ainsi que le ou les compte-tours qui indiquent **2.**

Les mécanismes d'horlogerie peuvent être soit mécaniques (à toutes températures de - 150° C à + 130° C), soit électroniques (aux températures comprises entre - 30° C et + 60° C).

Le bon fonctionnement d'un tel système est contrôlable à tout moment, en effet :
- le nombre de dépassements pour chaque mécanisme aux températures élevées doit toujours être inférieur d'au moins **1** à celui de la température de stockage par exemple :
   nombre de tours à - 18° C = x
   nombre de tours à - 5° C = x - 1
- le nombre de dépassements pour les mécanismes aux températures élevées doit suivre la règle suivante :
nombre de tours à - 5° C = x : alors le nombre de tours à 0° C (qui est plus loin à gauche dans le dispositif figure 37) est inférieur ou égal à x. En effet, le mécanisme doit toújours déclencher à - 5° C avant de déclencher à 0° C, s'il va jusqu'à cette température. De plus, la durée de dépassement à 0° C sera toujours inférieure ou égale à la durée de dépassement de - 5° C.

Ainsi, en regardant les mécanismes d'horlogerie et les comptetours associés, il est possible de vérifier par ces conditions, s'il y a une avarie dans le système de marquage (poussoir abîmé...).

A la place d'un mécanisme d'horlogerie aux températures de stockage et températures élevées, il est possible de mettre un système électronique enregistrant lorsque le poussoir est enclenché l'intégralité des données, dates de dépassement. Ce dernier dispositif est le plus sophistiqué.

Enfin, il est possible d'avoir un système tel que décrit à la figure 35 indiquant avec l'ajout d'un calendrier électronique les dates de dépassement de hautes températures.

Une variante de ce système peut consister en deux fenêtres **95** graduées **96** de plus petites tailles, situées à chacune des extrémités de la chambre **94** au regard des mécanismes d'horlogerie.

En prenant un piston **93** dont l'appui soit de couleur verte et la tige de couleur rouge, on saurait à tout instant, en regardant la fenêtre de l'extrémité droite :
- si la couleur est verte : tout va bien et on regarde le mécanisme d'horlogerie, et en regardant la fenêtre de l'extrémité gauche :
- si la couleur est rouge : attention, il y a eu un dépassement de température et il convient de regarder le mécanisme d'horlogerie pour voir les durées de dépassement en température.

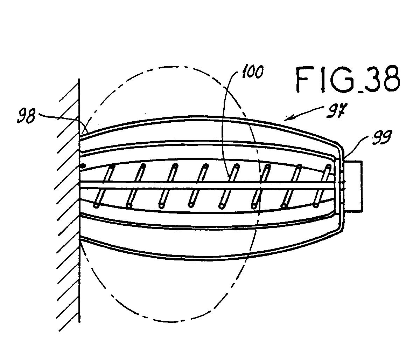

La figure 38 représente un actionneur rotatif permettant d'obtenir à la fois un déplacement longitudinal, de type ressort, et un mouvement rotatif, sans avoir à recourir à un dispositif complexe de mise en rotation. Cet actionneur comprend une structure en forme générale de sphère délimitée par des éléments en alliage à mémoire de forme **97**, réalisés à partir de fils, lames ou ressorts plats. A son extrémité **98,** la sphère est solidaire du bâti alors que son autre extrémité **99** est libre. Un ressort central **100** est associé à la sphère, qui est suffisamment fort pour aplatir cette dernière en phase martensitique, mais trop faible pour la retenir en phase austénitique.

Lors d'un refroidissement, les éléments tendent à se rétracter en vrillant, ce qui assure un rapprochement des deux extrémités fixe et mobile, avec un mouvement de rotation de l'extrémité mobile, qui peut aller jusqu'à 360°. Lors d'une montée en température, les éléments reprennent leur position précédente, assurant un déplacement axial et en rotation en sens inverse. Ce dispositif est susceptible d'actionner un système avertisseur ou d'entraîner un système en rotation composé uniquement de roues libres, sans utiliser de couple pignon-crémaillère.

Le ressort central **100** n'est pas obligatoire si les éléments en alliage à mémoire de forme sont éduqués dans un double sens, à haute et à basse température. Les moyens de transmission de l'information peuvent être similaires à ceux décrits dans les formes d'exécution précédentes. Le fait d'utiliser plusieurs éléments en alliage à mémoire de forme permet de disposer d'un système très performant.

Dans toutes les formes d'exécutions décrites précédemment, il est possible de mette en oeuvre des éléments à mémoire de forme présentant un fonctionnement avec hystérésis ou sans hystérésis.

Dans toutes les formes d'exécution décrites précédemment, il est possible d'associer à l'élément ou aux éléments en alliage à mémoire un ou des ressorts permettant de modifier les températures de réaction du dispositif.

Comme il ressort de ce qui précède, l'invention apporte une grande amélioration à la technique existante, en fournissant un dispositif de contrôle de la température d'un produit ou d'un article, et de détection d'un dépassement de température, avec visualisation immédiate d'un dépassement et comptabilisation du nombre de dépassements.

C'est ainsi notamment que les moyens permettant d'introduire une inertie thermique dans le fonctionnement du ressort pourraient être différents, et constitués par exemple par un cylindre à l'intérieur duquel serait monté le ressort, sans que l'on sorte pour autant du cadre de l'invention.

## Revendications

1. Dispositif pour le contrôle de températures, caractérisé en ce qu'il comprend un boîtier (2, 34, 55) en matière synthétique, contenant un élément moteur (7, 35, 57) réalisé en au moins un alliage à mémoire de forme, auquel est associé un élément de transmission du mouvement constitué par un piston (9, 36, 45, 58) et une tige (10, 37, 59), qui agit sur au moins un élément de signalisation (4, 20, 38, 65) enregistrant de façon irréversible chaque dépassement d'un température prédéterminée, le boîtier comportant des fenêtres transparentes permettant la visualisation de l'état du ou des éléments de signalisation.

2. Dispositif selon la revendication 1, caractérisé en ce qu'il comprend :
. une roue (4), montée pivotante dans le boîtier (2)et susceptible de rotation dans un seul sens, équipée à sa périphérie de dents (5) orientées vers l'arrière par rapport au sens de rotation,
. un ressort (7) en alliage à mémoire de forme monté dans un cylindre (8) d'axe sensiblement tangent à la circonférence de la roue, dont une extrémité est fixée sur le fond du boîtier et dont l'autre extrémité est fixée sur un piston (9) monté coulissant dans le cylindre, et de l'autre face duquel fait saillie une tige (10) dont l'extrémité libre est équipée d'un organe (12) élastiquement déformable prenant appui contre une dent de la roue, la course du ressort en alliage à mémoire de forme étant telle qu'un cycle de déformation provoque la rotation de la roue d'un angle égal à l'angle entre deux dents successives de la roue.

3. Dispositif selon la revendication 2, caractérisé en ce que les moyens permettant la rotation dans un seul sens de la roue (4) sont constitués par une languette (6) réalisée en un matériau déformable, telle qu'une languette métallique, orientée sensiblement tangentiellement à la roue, et prenant appui dans l'évidement ménagé en arrière de la dent de la roue se trouvant en face d'elle.

4. Dispositif selon l'une quelconque des revendications 2 et 3, caractérisé en ce que le boîtier (2) est équipé d'une butée (16) contre laquelle est destiné à venir prendre appui un doigt (15) solidaire de la roue, avant que cette dernière ait pivoté de 360°.

5. Dispositif selon l'une quelconque des revendications 2 à 4, caractérisé en ce que les éléments de signalisation d'éventuels dépassements de température sont constitués par une fenêtre transparente (14) disposée sur le trajet de la zone périphérique de la roue (4), cette dernière étant équipée de repères (13) disposés selon la même répartition angulaire que les dents (5), et de telle sorte qu'un repère (13) soit toujours en face de la fenêtre, en position arrêtée de la roue (4).

6. Dispositif selon l'une quelconque des revendications 2 à 5, caractérisé en ce que le boîtier (2) comporte une fenêtre transparente (17) disposée en regard du piston (9) associé au ressort, lorsque celui-ci est dans un état correspondant à une température normale du produit à contrôler.

7. Dispositif selon l'une quelconque des revendications 2 à 4, caractérise en ce que la roue (4) est équipée, dans un plan parallèle à celui comportant les dents, d'un nombre égal de godets (18) occupant la même répartition angulaire, et débouchant vers l'extérieur, et en ce qu'un magasin (19, 27) contenant des éléments de signalisation et adjacent au cylindre contenant le ressort en alliage à mémoire de forme, comporte une ouverture obturable par un tiroir (22, 32) associé à la tige (10) de l'élément de transmission de mouvement de façon à ne laisser passer, au cours de chaque cycle de déformation de l'élément en alliage à mémoire de forme, qu'un élément de visualisation ou un groupe d'éléments permettant le remplissage d'un godet (18, 25), le corps du boîtier comportant une fenêtre transparente en regard du trajet circulaire des godets.

8. Dispositif selon la revendication 7, caractérisé en ce que les éléments de visualisation sont constitués par des billes (20) dont chacune est destinée à remplir un godet (18).

9. Dispositif selon la revendication 7, caractérise en ce que les éléments de visualisation, contenus dans le réservoir (27) et destinés à être transférés dans les godets (25), sont constitués par un fluide, tel que poudre, sable ou liquide visqueux maintenu poussé vers l'ouverture de sortie par un piston (29) actionné par un ressort (30).

10. Dispositif selon l'une quelconque des revendications 7 à 9, caractérisé en ce que chaque godet (18, 25) est équipé de moyens (23, 26) de passage à sens unique des éléments de visualisation, dans le seul sens d'introduction des éléments dans les godets.

11. Dispositif selon la revendication 1, caractérisé en ce qu'il comprend un boîtier (34) de forme allongée à l'une des extrémités duquel est monté un ressort (35) réalisé en alliage à mémoire de forme dont une extrémité prend appui contre un fond du boîtier et dont l'autre extrémité prend appui sur un piston (36) solidaire d'une tige (37) s'étendant dans le sens de la longueur du boîtier sur laquelle est engagée un curseur (38) profilé, c'est-à-dire dont la paroi latérale s'étendant de la tige vers l'extérieur et de l'extrémité du boîtier opposée à celle équipée du ressort, vers celle comportant le ressort, la tige (37) comportant des crans (39) orientés pour permettre son déplacement par rapport au curseur (38) seulement en direction du ressort (35), tandis que le boîtier comporte des crans (40) coopérant avec le bord du curseur, afin de ne permettre le déplacement de celui-ci que de l'extrémité du boîtier comportant le ressort vers son extrémité opposée, l'écartement des crans (40) du boîtier correspondant à la course du ressort (35) lors de son changement d'état, le corps du boîtier comportant une fenêtre transparente dans la zone de déplacement du curseur.

12. Dispositif selon la revendication 11, caractérisé en ce que la tige (37) est équipée, à proximité de son extrémité située du côté du piston (36), d'un épaulement (42) destiné, lors de la première rétraction du ressort (35), à déplacer un anneau (43) en direction de ce dernier pour l'amener dans un logement (44) disposé en regard d'une fenêtre transparente du boîtier.

13. Dispositif selon la revendication 1, caractérisé en ce qu'il comprend un boîtier (34) de forme allongée dont la paroi longitudinale présente, sur sa face intérieure, une succession de crans (40) régulièrement répartis constitués par une alternance de surfaces inclinées par rapport à l'axe du boîtier et perpendiculaires à celui-ci, permettant le déplacement dans un sens seulement de deux curseurs (38, 45) sur les faces en regard desquels sont fixées les extrémités d'un ressort (35) réalisé en alliage à mémoire de forme.

14. Dispositif selon la revendication 13, caractérisé en ce que, dans la mesure où le ressort (35) en alliage à mémoire de forme possède une hystérésis, le curseur (45) situé en arrière dans le sens de déplacement de l'ensemble mobile porte une tige (37) tournée vers l'avant, dans le sens du déplacement, sur laquelle est montée librement le second curseur (38), et dont l'autre extrémité possède un épaulement (46) sur lequel prend appui un ressort de compensation (47) dont l'autre extrémité prend appui contre le curseur (38) monté mobile sur la tige.

15. Dispositif selon l'une quelconque des revendications 13 et 14, caractérisé en ce que l'un au moins des curseurs (38, 45) est réalisé en un alliage à mémoire de forme.

16. Dispositif selon la revendication 1, caractérisé en ce qu'il comprend un boîtier (55) de forme générale rectangulaire dans lequel sont ménagées deux chambres allongées (56, 62) perpendiculaires et débouchant l'une dans l'autre, la première chambre (56) contenant un ressort (57) réalisé en alliage à mémoire de forme dont une extrémité prend appui contre le fond de la chambre et dont l'autre extrémité prend appui contre un piston (58) duquel fait saillie une tige (59) dont l'extrémité obture l'extrémité de la seconde chambre (62) lorsque le ressort est en position détendue, la seconde chambre (62) contenant des billes maintenues (64, 65) poussées élastiquement en direction de son ouverture de communication avec la première chambre, et susceptibles d'être transférées dans la partie (63) de la première chambre ne contenant pas le ressort, le boîtier comportant une fenêtre transparente (70) au niveau de cette partie de la première chambre.

17. Dispositif selon la revendication 16, caractérise en ce que la seconde chambre (62) comprend, au-delà de sa zone de croisement avec la première chambre, un compartiment (66) destiné au logement de la première bille (64) contenue dans la seconde chambre.

18. Dispositif selon l'une quelconque des revendications 1 à 17, caractérisé en ce qu'il comprend des moyens (50) destinés à retarder la déformation de l'élément en alliage à mémoire de forme, lors d'une variation de température.

19. Dispositif selon la revendication 18, caractérisé en ce que les moyens destinés à retarder la déformation du ressort en alliage à mémoire de forme sont constitués par un compartiment dans lequel est logé le ressort et dont les parois possèdent une inertie thermique adaptée au retard de déformation souhaité.

20. Dispositif selon la revendication 18, caractérisé en ce que les moyens destinés à retarder la déformation du ressort en alliage à mémoire de forme sont constitués par des surépaisseurs localisées du boîtier.

21. Dispositif selon l'une quelconque des revendications 16 à 20, caractérisé en ce qu'il comprend une fenêtre (76) ménagée dans le boîtier (55), laissant visible l'intérieur de la chambre (56) contenant le piston (58) et la tige (59) de celui-ci, dans la zone de celle-ci dans laquelle se trouve l'épaulement du piston (58) servant à l'appui du ressort en alliage à mémoire de forme, lorsque le dispositif est à la température de consigne.

22. Dispositif selon la revendication 21, caractérise en ce que la fenêtre (77) ménagée dans le boîtier (55), en regard de la chambre (56) s'étendant sur une partie importante de la zone de débattement d'un repère solidaire du piston (58) ou de la tige (59) de celui-ci, ce repère étant par exemple constitué par l'épaulement du piston, dont la position est déterminée instantanément par des graduations (78) ménagées sur un bord de la fenêtre.

23. Dispositif selon la revendication 1, caractérisé en ce qu'il comprend un boîtier (81) de forme générale parallélépipèdique dans lequel est ménagée une chambre allongée (94) dont une partie contient un ressort (92) en alliage à mémoire de forme, dont une extrémité prend appui contre un fond de la chambre, et dont l'autre extrémité prend appui contre la tête d'un piston (93) solidaire d'une tige (88) susceptible de pénétrer par coulissement dans la seconde partie de la chambre après traversée d'une partie épaulée (86), le boîtier comportant également un organe d'actionnement par le piston (93) d'un mécanisme d'enregistrement du nombre de cycles effectués par le ressort et éventuellement des durées et dates de maintien de la température de consigne, et d'au moins un organe (83) d'actionnement par la tige (88) d'au moins un mécanisme d'enregistrement d'au moins une température plus élevée que la température de consigne, avec éventuellement enregistrement des durées et dates du dépassement de la température de consigne.

24. Dispositif selon la revendication 23, caractérisé en ce que les organes d'actionnement des mécanismes sont constitués par des leviers pivotants (83,91) actionnés respectivement en pivotement dans des sens opposés par la tige (88) et le piston (93), et agissant eux-mêmes sur des interrupteurs (82,90).

25. Dispositif selon l'une quelconque des revendications 23 et 24, caractérisé en ce que le boîtier comporte en regard de la seconde partie de la chambre (94), une fenêtre (95) dont un bord longitudinal comporte des graduations (96) de visualisation de la position de l'extrémité de la tige (88), et par suite de la température à laquelle se trouve le boîtier.

26. Dispositif selon l'une quelconque des revendications 23 à 25, caractérisé en ce que chaque mécanisme de mesure du changement de température est constitué par un mouvement d'horlogerie (85,89), déclenché par l'organe actionné par la tige (88) ou le piston (93) respectivement, associé à un compte-tours (84 a, b, c) destiné à compter le nombre d'actionnements de l'interrupteur de l'horloge.

27. Dispositif selon l'une quelconque des revendications 23 à 26, caractérisé en ce qu'il comprend plusieurs mécanismes (84,85) d'enregistrement commandés par des organes d'actionnement décalés axialement par rapport à la tige (88), pour réagir à des températures différentes les unes des autres.

28. Dispositif selon la revendication 1, caractérisé en ce qu'il comprend un actionneur possédant une forme générale de sphère délimitée par plusieurs éléments (97) en alliage à mémoire de forme, dont une extrémité est solidaire d'un bâti fixe et dont l'autre extrémité est libre et susceptible d'un mouvement combiné de translation et de rotation lors des variations de température.

29. Dispositif selon l'une quelconque des revendications 1 à 28, caractérisé en ce qu'il comprend au moins un ressort associé à l'élément ou aux éléments en alliage à mémoire, destiné à modifier les températures de réaction du dispositif.

30. Dispositif selon l'une quelconque des revendications 1 à 29, caractérisé en ce que les éléments en alliage à mémoire de forme sont à fonctionnement sans hystérésis.

31. Dispositif selon l'une quelconque des revendications 1 à 29, caractérisé en ce que les éléments en alliage à mémoire de forme sont à fonctionnement avec hystérésis.

## Claims

1. Device for monitoring temperatures, characterised in that it comprises a casing (2, 34, 55) made of synthetic material, containing a drive component (7, 35, 57) made of at least one shape-memory alloy, with which is associated a movement-transmission component consisting of a piston (9, 36, 45, 58) and a rod (10, 37, 59), which acts on at least one indicator element (4, 20, 38, 65) registering irreversibly each occasion on which a predetermined temperature has been exceeded, the casing having transparent windows enabling the state of the indicator element or elements to be observed.

2. Device according to Claim 1, characterised in that it comprises:
. a wheel (4), mounted so as to pivot in the casing (2) and able to rotate in a single direction, equipped around its periphery with teeth (5) pointing backwards with respect to the direction of rotation,
. a spring (7) made of a shape-memory alloy mounted in a cylinder (8) having an axis which is substantially tangential to the circumference of the wheel, one end of which is fixed to the bottom of the casing and the other end of which is fixed to a piston (9) mounted so as to slide in the cylinder and from the other face of which projects a rod (10), the free end of which is equipped with an elastically deformable member (12) bearing against a tooth of the wheel, the travel of the spring made of a shape-memory alloy being such that one deformation cycle causes the wheel to rotate by an angle equal to the angle between two successive teeth of the wheel.

3. Device according to Claim 2, characterised in that the means enabling the wheel (4) to rotate in only one direction consist of a tongue (6) made of a deformable material, such as a metal tongue, oriented substantially tangentially to the wheel and bearing in the recess located behind the tooth of the wheel which is opposite it.

4. Device according to either one of Claims 2 and 3, characterised in that the casing (2) is equipped with a stop (16) against which a finger (15) fixed to the wheel is intended to bear, before the latter has pivoted through 360°.

5. Device according to any one of Claims 2 to 4, characterised in that the elements for indicating any occasions on which the temperature is exceeded consist of a transparent window (14) disposed on the path of the outer part of the wheel (4), the latter being provided with marks (13) disposed according to the same angular distribution as the teeth (5) and in such a way that one mark (13) is always opposite the window, in the position in which the wheel (4) stops.

6. Device according to any one of Claims 2 to 5, characterised in that the casing (2) has a transparent window (17) disposed opposite the piston (9) associated with the spring, when the latter is in a state corresponding to a normal temperature of the product to be monitored.

7. Device according to any one of Claims 2 to 4, characterised in that the wheel (4) is equipped, in a plane parallel to the one in which the teeth lie, with an equal number of cups (18) having the same angular distribution and opening towards the outside, and in that a magazine (19, 27) containing indicator elements and adjacent to the cylinder containing the spring made of a shape-memory alloy has a opening which can be closed off by a slide (22, 32) connected to the rod (10) of the movement transmission component so as to allow only one display element or one group of elements enabling a cup (18, 25) to be filled to pass in the course of each deformation cycle of the component made of a shape-memory alloy, the body of the casing having a transparent window opposite the circular path of the cups.

8. Device according to Claim 7, characterised in that the display elements consist of balls (20), each of which is intended to fill a cup (18).

9. Device according to Claim 7, characterised in that the display elements contained in the reservoir (27) and intended to be transferred into the cups (25), consist of a fluid, such as a powder, sand or a viscous liquid continuously pushed towards the outlet by a piston (29) actuated by a spring (30).

10. Device according to any one of Claims 7 to 9, characterised in that each cup (18, 25) is equipped with means (23, 26) enabling the display elements to move in a single direction, only in the direction in which the elements enter the cups.

11. Device according to Claim 1, characterised in that it comprises an elongate casing (34) at one of the ends of which is mounted a spring (35) made of a shape-memory alloy, one end of which bears against a wall of the casing and the other end of which bears on a piston (36) attached to a rod (37) extending in the direction of the length of the casing on which a profiled cursor (38) is engaged, *ie* the lateral wall of which, extending from the rod outwards and from the end of the casing opposite to the end fitted with the spring towards the end having the spring, the rod (37) having teeth (39) oriented so as to enable it to move with respect to the cursor (38) only in the direction of the spring (35), whilst the casing has notches (40) cooperating with the edge of the cursor, so as to allow the latter to move only from the end of the casing having the spring towards its opposite end, the spacing of the notches (40) in the casing corresponding to the travel of the spring (35) when it changes state, the body of the casing having a transparent window in the area in which the cursor moves.

12. Device according to Claim 11, characterised in that the rod (37) is equipped, near its end situated on the side nearest the piston (36), with a shoulder (42) intended, when the spring is first retracted (35), to move a ring (43) in the direction of the spring to bring it into a housing (44) disposed opposite a transparent window in the casing.

13. Device according to Claim 1, characterised in that it comprises an elongate casing (34), the longitudinal wall of which has, on its inner face, a succession of evenly spaced notches (40) consisting of alternating surfaces inclined with respect to the axis of the casing and perpendicular to it, enabling two cursors (38, 45), on the facing faces of which are fixed the ends of a spring (35) made of a shape-memory alloy, to move in only one direction.

14. Device according to Claim 13, characterised in that, because the spring (35) made of a shape-memory alloy exhibits hysteresis, the cursor (45) situated at the rear, with respect to the direction of movement of the moving assembly, bears a rod (37) pointing forwards, with respect to the direction of movement, on which the second cursor (38) is mounted freely, and the other end of which has a shoulder (46) on which bears a compensating spring (47) whose other end bears against the cursor (38) which is mounted movably on the rod.

15. Device according to either one of Claims 13 and 14, characterised in that at least one of the cursors (38, 45) is made of a shape-memory alloy.

16. Device according to Claim 1, characterised in that it comprises a casing (55) of a generally rectangular shape in which are provided two elongate chambers (56, 62) which are perpendicular and open out into each other, the first chamber (56) containing a spring (57) made of a shape-memory alloy, one end of which bears against the base of the chamber and the other end of which bears against a piston (58) from which projects a stem (59), the end of which closes off the end of the second chamber (62) when the spring is in the extended position, the second chamber (62) containing balls (64, 65) which are continuously pushed elastically in the direction of its aperture communicating with the first chamber and able to be transferred into the part (63) of the first chamber which does not contain the spring, the casing having a transparent window (70) at this part of the first chamber.

17. Device according to Claim 16, characterised in that the second chamber (62) comprises, beyond the area where it intersects with the first chamber, a compartment (66) designed to house the first ball (64) contained in the second chamber.

18. Device according to any one of Claims 1 to 17, characterised in that it comprises means (50) intended to retard the deformation of the component made of a shape-memory alloy when there is a variation in temperature.

19. Device according to Claim 18, characterised in that the means intended to retard the deformation of the spring made of a shape-memory alloy consist of a compartment in which the spring is housed and the walls of which have a thermal inertia suitable for the desired delay in deformation.

20. Device according to Claim 18, characterised in that the means intended to retard the deformation of the spring made of a shape-memory alloy consist of localised protuberances on the casing.

21. Device according to any one of Claims 16 to 20, characterised in that it comprises a window (76) provided in the casing (55), leaving visible the inside of the chamber (56) containing the piston (58) and the stem (59) of the latter, in the area of it in which is situated the shoulder of the piston (58) serving as a support for the spring made of a shape-memory alloy, when the device is at the set temperature.

22. Device according to Claim 21, characterised in that the window (77) provided in the casing (55), opposite the chamber (56) extending over a considerable proportion of the area of movement of a reference marker fixed to the piston (58) or to the stem (59) of the latter, this reference marker consisting for example of the shoulder of the piston, the position of which is immediately determined by graduations (78) made on a side of the window.

23. Device according to Claim 1, characterised in that it comprises a casing (81) in the general shape of a parallelepipe and in which is provided an elongate chamber (94), part of which contains a spring (92) made of a shape-memory alloy, one end of which bears against a base of the chamber and the other end of which bears against the head of a piston (93) fixed to a stem (88) able to slide into the second part of the chamber after passing through a part with a projection (86), the casing also having a member for actuating, by means of the piston (93), a mechanism recording the number of cycles completed by the spring and, if required, the durations for which and dates at which the set temperature was maintained, and at least one member (83) for actuating, by means of the stem (88), at least one mechanism for recording at least one temperature above the set temperature, optionally with recording of the durations for which and dates at which the set temperature was exceeded.

24. Device according to Claim 23, characterised in that the members for actuating the mechanisms consist of pivoting levers (83, 91) actuated to pivot respectively in opposite directions by the stem (88) and the piston (93), and themselves acting on switches (82, 90).

25. Device according to either one of Claims 23 and 24, characterised in that the casing has, opposite the second part of the chamber (94), a window (95), one longitudinal edge of which has graduations (96) for displaying the position of the end of the stem (88) and therefore of the temperature of the casing.

26. Device according to any one of Claims 23 to 25, characterised in that each mechanism for measuring the change in temperature consists of a clockwork movement (85, 89), triggered by the member actuated by the stem (88) or the piston (93) respectively, associated with a revolution counter (84 a, b, c) intended to count the number of actuations of the clock switch.

27. Device according to any one of Claims 23 to 26, characterised in that it comprises several recording mechanisms (84, 85) controlled by actuating members offset axially with respect to the stem (88), in order to react to temperatures which are different from each other.

28. Device according to Claim 1, characterised in that it comprises an actuator having the general shape of a sphere delimited by several elements (97) made of a shape-memory alloy, one end of which is fixed to a fixed structure and the other end of which is free and able to make a combined linear and rotary movement when there are variations in temperature.

29. Device according to any one of Claims 1 to 28, characterised in that it comprises at least one spring associated with the component or components made of a shape-memory alloy, intended to modify the reaction temperatures of the device.

30. Device according to any one of Claims 1 to 29, characterised in that the components made of a shape-memory alloy function without hysteresis.

31. Device according to any one of Claims 1 to 29, characterised in that the components made of a shape-memory alloy function with hysteresis.

## Patentansprüche

1. Temperaturüberwachungsvorrichtung, dadurch gekennzeichnet, daß sie ein Gehäuse (2, 34, 55) aus Kunststoff umfaßt, welches ein von wenigstens einer Formgedächtnislegierung gebildetes Antriebselement (7, 35, 57) aufweist, welchem ein von einem Kolben (9, 36, 45, 58) und einer Stange (10, 37, 59) gebildetes Bewegungsübertragungselement zugeordnet ist, welches auf wenigstens ein in irreversibler Weise jedes Überschreiten einer vorbestimmten Temperatur aufzeichnendes Anzeigeelement (4, 20, 38, 65) einwirkt, wobei das Gehäuse die Sichtbarmachung des Zustands des oder der Anzeigeelemente ermöglichende, durchsichtige Fenster umfaßt.

2. Vorrichtung nach Anspruch 1, dadurch gekennzeichnet, daß sie umfaßt:
ein in einer einzigen Drehrichtung drehbar an dem Gehäuse (2) angebrachtes Rad (4), welches an seinem Umfang relativ zur Drehrichtung rückwärts gerichtete Zähne (5) aufweist,
eine in einem Zylinder (8) mit zum Umfang des Rads im wesentlichen tangentialer Achse angeordnete Formgedächtnislegierungsfeder (7), deren eines Ende an dem Boden des Gehäuses festgelegt ist und deren anderes Ende an einem in dem Zylinder verschiebbar angebrachten Kolben (9) festgelegt ist, wobei von der anderen Seite des Kolbens eine Stange (10) vorsteht, deren freies Ende mit einem sich gegen einen Zahn des Rads abstützenden, elastisch verformbaren Element (12) versehen ist, wobei der Hub der Formgedächtnislegierungsfeder derart ist, daß ein Verformungszyklus die Drehung des Rades um einen Winkel bewirkt, welcher gleich dem Winkel zwischen zwei aufeinander folgenden Zähnen des Rades ist.

3. Vorrichtung nach Anspruch 2, dadurch gekennzeichnet, daß die die Drehung des Rads (4) in einer einzigen Richtung ermöglichenden Mittel von einer aus einem verformbaren Material hergestellten Zunge (6) gebildet sind, z.B. einer Metallzunge, welche im wesentlichen tangential zum Rad gerichtet ist und sich in der Ausnehmung abstützt, welche hinter dem vor ihr befindlichen Zahn des Rades ausgebildet ist.

4. Vorrichtung nach einem der Ansprüche 2 und 3, dadurch gekennzeichnet, daß das Gehäuse (2) einen Anschlag (16) aufweist, wobei ein mit dem Rad verbundener Finger (15) dazu bestimmt ist, sich gegen den Anschlag vor einer Drehung des Rades um 360° abzustützen.

5. Vorrichtung nach einem der Ansprüche 2 bis 4, dadurch gekennzeichnet, daß die Anzeigeelemente eventueller Temperaturüberschreitungen von einem in dem Weg des Umfangsbereichs des Rads (4) angeordneten durchsichtigen Fenster (14) gebildet sind, wobei das Rad Markierungen (13) aufweist, welche gemäß der gleichen Winkelverteilung wie die Zähne (5) angeordnet sind, derart, daß in Anhaltestellung des Rads (4) sich immer eine Markierung (13) vor dem Fenster befindet.

6. Vorrichtung nach einem der Ansprüche 2 bis 5, dadurch gekennzeichnet, daß das Gehäuse (2) ein durchsichtiges Fenster (17) umfaßt, welches sich gegenüber dem der Feder zugeordneten Kolben (9) befindet, wenn die Feder in einem einer Normaltemperatur des zu überwachenden Erzeugnisses entsprechenden Zustand ist.

7. Vorrichtung nach einem der Ansprüche 2 bis 4, dadurch gekennzeichnet, daß das Rad (4) in einer zur die Zähne enthaltenden Ebene parallelen Ebene eine gleiche Anzahl von die gleiche Winkelverteilung aufweisenden, nach außen hin offenen Näpfen (18) aufweist und daß ein Anzeigeelemente umfassendes, dem die Formgedächtnislegierungsfeder umfassenden Zylinder benachbartes Magazin (19, 27) eine Öffnung aufweist, welche von einem mit der Stange (10) des Bewegungsübertragungselements verbundenen Schieber (22, 32) verschließbar ist, derart, daß während jedes Verformungszyklus des Formgedächtnislegierungselements nur ein das Auffüllen eines Napfs (18, 25) ermöglichendes Sichtanzeigeelement oder eine Gruppe von Elementen durchgelassen wird, wobei der Gehäusekörper ein durchsichtiges Fenster gegenüber der kreisförmigen Bahn der Näpfe umfaßt.

8. Vorrichtung nach Anspruch 7, dadurch gekennzeichnet, daß die Sichtanzeigeelemente von Kugeln (20) gebildet sind, von denen jede dazu bestimmt ist, einen Napf (18) aufzufüllen.

9. Vorrichtung nach Anspruch 7, dadurch gekennzeichnet, daß die in dem Reseroir (27) enthaltenen und zur Überführung in die Näpfe (25) bestimmten Sichtanzeigeelemente von einem Fluid, z.B. Pulver, Sand oder viskoser Flüssigkeit, gebildet sind, welches durch einen von einer Feder (30) betätigten Kolben (29) zur Ausgabeöffnung hin gedrängt ist.

10. Vorrichtung nach einem der Ansprüche 7 bis 9, dadurch gekennzeichnet, daß jeder Napf (18, 25) Mittel (23, 26) zum Durchlassen der Sichtanzeigeelemente in einer einzigen Durchgangsrichtung umfaßt, in der Richtung des Einführens der Elemente in die Näpfe.

11. Vorrichtung nach Anspruch 1, dadurch gekennzeichnet, daß sie ein längliches Gehäuse (34) umfaßt, an dessen einem Ende eine aus Formgedächtnislegierung gebildete Feder (35) angebracht ist, deren eines Ende sich gegen einen Gehäuseboden und deren anderes Ende sich gegen einen Kolben (36) abstützt, welcher mit einer sich in der Gehäuselängsrichtung erstreckenden Stange (37) verbunden ist, auf der ein Schieber (38) mit Profil aufgesetzt ist, d.h. dessen Seitenwandung erstreckt sich von der Stange nach außen und von dem Ende des Gehäuses, welches dem mit der Feder versehenen gegenüberliegt, zu dem die Feder umfassenden Ende, wobei die Stange (37) gerichtete Rastvorsprünge (39) umfaßt, um ihre Verlagerung relativ zu dem Schieber (38) nur in Richtung der Feder (35) zu ermöglichen, während das Gehäuse mit dem Rand des Schiebers zusammenwirkende Rastvorsprünge (40) umfaßt, um nur die Verlagerung des Schiebers von dem die Feder aufweisenden Ende des Gehäuses in Richtung auf sein gegenüberliegendes Ende zu ermöglichen, wobei der Abstand der Rastvorsprünge (40) des Gehäuses dem Hub der Feder (35) bei ihrer Zustandsänderung entspricht und wobei der Gehäusekörper im Bereich der Verlagerung des Schiebers ein durchsichtiges Fenster umfaßt.

12. Vorrichtung nach Anspruch 11, dadurch gekennzeichnet, daß die Stange (37) in der Nähe ihres dem Kolben (36) benachbarten Endes einen Vorsprung (42) aufweist, welcher beim ersten Zusammenziehen der Feder (35) dazu bestimmt ist, einen Ring (43) in Richtung auf die Feder zu verlagern, um den Ring in eine Aufnahme (44) zu bringen, welche einem durchsichtigen Fenster des Gehäuses gegenüber liegt.

13. Vorrichtung nach Anspruch 1, dadurch gekennzeichnet, daß sie ein längliches Gehäuse (34) umfaßt, dessen Längswandung an ihrer Innenseite eine regelmäßig verteilte Abfolge von Rastvorsprüngen (40) aufweist, welche von einer abwechselnden Anordnung relativ zur Achse des Gehäuses geneigter Flächen und zu dieser Achse orthogonaler Flächen gebildet sind und welche die Verlagerung von zwei Schiebern (38, 45) in einer einzigen Richtung ermöglichen, wobei an den gegenüberliegenden Seiten der Schieber die Enden einer aus Formgedächtnislegierung gebildeten Feder (35) befestigt sind.

14. Vorrichtung nach Anspruch 13, dadurch gekennzeichnet, daß, insofern die Formgedächtnislegierungsfeder (35) eine Hysterese aufweist, der in der Verlagerungsrichtung der bewegbaren Gesamtheit hintere Schieber (45) eine in der Verlagerungsrichtung nach vorne gerichtete Stange (37) trägt, auf welcher der zweite Schieber (38) frei angebracht ist und deren anderes Ende eine Schulter (46) aufweist, an welcher sich eine Kompensationsfeder (47) abstützt, deren anderes Ende sich gegen den auf der Stange bewegbar angebrachten Schieber (38) abstützt.

15. Vorrichtung nach einem der Ansprüche 13 und 14, dadurch gekennzeichnet, daß wenigstens der eine der Schieber (38, 45) aus einer Formgedächtnislegierung gebildet ist.

16. Vorrichtung nach Anspruch 1, dadurch gekennzeichnet, daß sie ein im allgemeinen rechteckiges Gehäuse (55) umfaßt, in welchem zwei zueinander orthogonale und sich ineinander öffnende, längliche Kammern (56, 62) ausgebildet sind, wobei die erste Kammer (56) eine aus Formgedächtnislegierung gebildete Feder (57) umfaßt, deren eines Ende sich gegen den Boden der Kammer abstützt und deren anderes Ende sich gegen einen Kolben (58) abstützt, von welchem eine Stange (59) vorsteht, deren Ende das Ende der zweiten Kammer (62) verschließt, wenn die Feder entspannt ist, und wobei die zweite Kammer (62) Kugeln (64, 65) umfaßt, welche in Richtung auf die Verbindungsöffnung der zweiten Kammer mit der ersten Kammer elastisch gedrängt sind und dazu geeignet sind, in den die Feder nicht umfassenden Bereich (63) der ersten Kammer überführt zu werden, wobei das Gehäuse in Höhe dieses Bereichs der ersten Kammer ein durchsichtiges Fenster (70) aufweist.

17. Vorrichtung nach Anspruch 16, dadurch gekennzeichnet, daß die zweite Kammer (62) jenseits ihres Kreuzungsbereichs mit der ersten Kammer einen zur Aufnahme der in der zweiten Kammer enthaltenen ersten Kugel (64) bestimmten Abschnitt (66) umfaßt.

18. Vorrichtung nach einem der Ansprüche 1 bis 17. dadurch gekennzeichnet, daß sie Mittel (50) umfaßt, welche dazu bestimmt sind, die Verformung des Formgedächtnislegierungselements bei einer Temperaturveränderung zu verzögern.

19. Vorrichtung nach Anspruch 18, dadurch gekennzeichnet, daß die zum Verzögern der Verformung der Formgedächtnislegierungsfeder bestimmten Mittel von einem Abschnitt gebildet sind, in welchem die Feder aufgenommen ist und dessen Wandungen einen der gewünschten Verformungsverzögerung angepaßten Wärmeleitwiderstand aufweisen.

20. Vorrichtung nach Anspruch 18, dadurch gekennzeichnet, daß die zum Verzögern der Verformung der Formgedächtnislegierungsfeder bestimmten Mittel von bereichsweise ausgebildeten Verdickungen des Gehäuses gebildet sind.

21. Vorrichtung nach einem der Ansprüche 16 bis 20, dadurch gekennzeichnet, daß sie ein in dem Gehäuse (55) ausgebildetes Fenster (76) umfaßt, welches das Innere der den Kolben (58) und die Stange (59) desselben umfassenden Kammer (56) in dem Bereich derselben sichtbar macht, in dem sich die zum Abstützen der Formgedächtnislegierungsfeder dienende Schulter des Kolbens (58) befindet, wenn die Vorrichtung die Solltemperatur aufweist.

22. Vorrichtung nach Anspruch 21, dadurch gekennzeichnet, daß das in dem Gehäuse (55) ausgebildete Fenster (77) gegenüber der Kammer (56) sich über einen beträchtlichen Teilbereich des Federverschiebungswegs einer mit dem Kolben (58) oder der Stange (59) desselben verbundenen Markierung erstreckt, wobei diese Markierung z.B. von der Schulter des Kolbens gebildet ist, dessen Stellung unmittelbar durch an einem Rand des Fensters ausgebildete Stricheinteilungen (78) bestimmt ist.

23. Vorrichtung nach Anspruch 1, dadurch gekennzeichnet, daß sie ein die allgemeine Form eines Parallelepipeds aufweisendes Gehäuse (81) umfaßt, in welchem eine längliche Kammer (94) ausgebildet ist, von welcher ein Bereich eine Formgedächtnislegierungsfeder (92) umfaßt, deren eines Ende sich gegen einen Boden der Kammer abstützt und deren anderes Ende sich gegen den Kopf eines mit einer Stange (88) verbundenen Kolbens (93) abstützt, wobei die Stange dazu geeignet ist, durch Verschieben in den zweiten Bereich der Kammer nach Durchquerung eines einen Vorsprung (86) aufweisenden Bereichs einzudringen, wobei das Gehäuse ferner ein von dem Kolben (93) betätigtes Element eines Aufzeichnungsmechanismus der Anzahl der von der Feder durchgeführten Zyklen und eventuell der Zeitdauern und Zeitpunkte des Haltens der Solltemperatur umfaßt und wenigstens ein von der Stange (88) betätigtes Element (83) von wenigstens einem wenigstens eine höhere Temperatur als die Solltemperatur aufzeichnenden Mechanismus mit eventueller Aufzeichnung der Zeitdauern und Zeitpunkte des Überschreitens der Solltemperatur.

24. Vorrichtung nach Anspruch 23, dadurch gekennzeichnet, daß die Betätigungselemente der Mechanismen von Schwenkhebeln (83, 91) gebildet sind, welche zum Verschwenken in entgegengesetzten Richtungen von der Stange (88) bzw. dem Kolben (93) betätigt werden und auf Schalter (82, 90) einwirken.

25. Vorrichtung nach einem der Ansprüche 23 und 24, dadurch gekennzeichnet, daß das Gehäuse gegenüber dem zweiten Bereich der Kammer (94) ein Fenster (95) umfaßt, von dem ein Längsrand Stricheinteilungen (96) umfaßt zum Sichtbarmachen der Stellung des Endes der Stange (88) und infolge dessen der Temperatur, welche das Gehäuse aufweist.

26. Vorrichtung nach einem der Ansprüche 23 bis 25, dadurch gekennzeichnet, daß jeder Mechanismus zum Messen der Temperaturänderung von einem Uhrwerk (85, 89) gebildet ist, welches von dem durch die Stange (88) bzw. den Kolben (93) betätigten Element in Gang gesetzt wird und welchem ein zum Zählen der Zahl der Betätigungen des Uhrwerkschalters bestimmtes Zählwerk (84a, b, c) zugeordnet ist.

27. Vorrichtung nach einem der Ansprüche 23 bis 26, dadurch gekennzeichnet, daß sie mehrere Aufzeichnungsmechanismen (84, 85) umfaßt, welche von relativ zur Stange (88) axial versetzten Betätigungselementen gesteuert sind, um auf voneinander unterschiedliche Temperaturen zu reagieren.

28. Vorrichtung nach Anspruch 1, dadurch gekennzeichnet, daß sie eine Betätigungseinrichtung umfaßt, welche eine allgemeine, von mehreren Formgedächtnislegierungselementen (97) begrenzte Kugelform aufweist, deren eines Ende mit einem festen Trageelement verbunden ist und deren anderes Ende frei ist und bei Temperaturveränderungen zu einer kombinierten Translations- und Rotationsbewegung fähig ist.

29. Vorrichtung nach einem der Ansprüche 1 bis 28, dadurch gekennzeichnet, daß sie wenigstens eine dem Formgedächtnislegierungselement oder den Formgedächtnislegierungselementen zugeordnete Feder umfaßt, welche dazu bestimmt ist, die Reaktionstemperaturen der Vorrichtung zu modifizieren.

30. Vorrichtung nach einem der Ansprüche 1 bis 29, dadurch gekennzeichnet, daß die Formgedächtnislegierungslemente ohne Hysterese arbeiten.

31. Vorrichtung nach einem der Ansprüche 1 bis 29, dadurch gekennzeichnet, daß die Formgedächtnislegierungselemente mit Hysterese arbeiten.
